(19) Europäisches Patentamt / European Patent Office / Office européen des brevets

(11) **EP 4 787 466 A1**

(12) **EUROPEAN PATENT APPLICATION**
published in accordance with Art. 153(4) EPC

(43) Date of publication:
05.08.2026 Bulletin 2026/32

(21) Application number: 24869668.4

(22) Date of filing: 15.04.2024

(51) International Patent Classification (IPC):
$H01M\ 4/36^{(2006.01)}$       $H01M\ 4/525^{(2010.01)}$
$H01M\ 4/505^{(2010.01)}$       $H01M\ 4/485^{(2010.01)}$
$H01M\ 10/054^{(2010.01)}$      $H01M\ 4/131^{(2010.01)}$

(52) Cooperative Patent Classification (CPC):
C01G 53/51; H01M 4/131; H01M 4/36; H01M 4/485;
H01M 4/505; H01M 4/525; H01M 10/054;
Y02E 60/10

(86) International application number:
PCT/CN2024/087808

(87) International publication number:
WO 2025/066099 (03.04.2025 Gazette 2025/14)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.09.2023 CN 202311277081
28.02.2024 CN 202410222045

(71) Applicant: Contemporary Amperex Technology Co., Limited
Ningde, Fujian 352100 (CN)

(72) Inventors:
• WU, Kai
Ningde, Fujian 352100 (CN)

• TANG, Zheng
Ningde, Fujian 352100 (CN)
• CHEN, Jiahua
Ningde, Fujian 352100 (CN)
• YE, Yonghuang
Ningde, Fujian 352100 (CN)
• OUYANG, Shaocong
Ningde, Fujian 352100 (CN)
• JIN, Haizu
Ningde, Fujian 352100 (CN)
• XU, Baoyun
Ningde, Fujian 352100 (CN)

(74) Representative: Gong, Jinping
CocreateIP
Neumarkter Straße 21
81673 München (DE)

(54) **POSITIVE ELECTRODE MATERIAL AND PREPARATION METHOD THEREFOR, POSITIVE ELECTRODE, SODIUM BATTERY AND ELECTRIC DEVICE**

(57) A positive electrode material and a preparation method thereof, a positive electrode (10), a sodium battery, and an electric apparatus are provided. The positive electrode material includes a layered oxide represented by a chemical formula $Na_qNi_xMn_yFe_zZn_pM_iO_j$, where $0.8 \leq q \leq 1$, $0.1 \leq x \leq 0.3$, $0.2 \leq y \leq 0.5$, $0.2 \leq z \leq 0.35$, $0.02 \leq p \leq 0.075$, $0 \leq i \leq 0.1$, $1.8 \leq j \leq 2$, $x+y+z+p+i \leq 1$, and M is an active and/or inert doping metal element. A preparation method of the positive electrode material includes a step of performing sintering treatment on a precursor of $Na_qNi_xMn_yFe_zZn_pM_iO_j$. The positive electrode (10) includes the layered oxide represented by the chemical formula. The sodium battery includes the positive electrode (10). The electric apparatus includes the sodium battery.

FIG. 1

# EP 4 787 466 A1

## Description

This application claims priority to the Chinese Patent Application No. 202311277081.5, filed with the China National Intellectual Property Administration on September 28, 2023 and entitled "POSITIVE ELECTRODE MATERIAL AND PREPARATION METHOD THEREOF, POSITIVE ELECTRODE, SODIUM BATTERY, AND ELECTRIC APPARATUS", and also claims priority to the Chinese Patent Application No. 202410222045.7, filed with the China National Intellectual Property Administration on February 28, 2024 and entitled "POSITIVE ELECTRODE MATERIAL AND PREPARATION METHOD THEREOF, POSITIVE ELECTRODE, SODIUM BATTERY, AND ELECTRIC APPARATUS", which is incorporated herein by reference in its entirety.

## TECHNICAL FIELD

This application belongs to the technical field of sodium batteries, and specifically relates to a positive electrode material and a preparation method thereof, a positive electrode, a sodium battery, and an electric apparatus.

## BACKGROUND

Sodium-ion batteries have advantages such as abundant raw material reserves, low costs, relatively stable chemical properties, and good safety, and are expected to replace lithium-ion batteries in the market. With the continuous development of new energy vehicles and the increasing proportion of clean energy, higher requirements are placed on the energy density and cycling stability of sodium-ion batteries.

In sodium-ion battery positive electrode materials, layered oxides have relatively high energy density and have become one of the research hotspots for sodium-ion battery positive electrode materials at present. However, layered oxides have poor structural stability. During intercalation and deintercalation of sodium, layered oxides are prone to phase transitions, leading to structural deformation, thus resulting in severe decay of the reversible capacity of layered oxides during cycling, and consequently causing fast cycling decay of sodium-ion batteries.

## TECHNICAL PROBLEM

In view of the above problems, this application provides a positive electrode material and a preparation method thereof, a positive electrode including the positive electrode material, and a sodium battery including the positive electrode, to solve the technical problem that existing layered oxides have undesirable structural stability, leading to fast gram capacity decay and cycling decay of a battery.

## TECHNICAL SOLUTION

According to a first aspect, an embodiment of this application provides a positive electrode material. The positive electrode material according to this embodiment of this application includes a layered oxide represented by the following chemical formula:

$$Na_qNi_xMn_yFe_zZn_pM_iO_j;$$

where $0.8 \leq q \leq 1$, $0.1 \leq x \leq 0.3$, $0.2 \leq y \leq 0.5$, $0.2 \leq z \leq 0.35$, $0.02 \leq p \leq 0.075$, $0 \leq i \leq 0.1$, $1.8 \leq j \leq 2$, and $x+y+z+p+i \leq 1$; and M is an active and/or inert doping metal element.

In the layered oxide contained in the positive electrode material according to this embodiment of this application, a transition metal layer ($TMO_6$) including the Ni, Fe, and Mn elements is doped with the Zn element or both the Zn element and the doping metal element represented by M, and the Zn element is controlled to the above low content, so that the Jahn-Teller effect brought by the Mn and Ni elements in the layered oxide represented by the chemical formula can be suppressed, and the arrangement between transition metal elements in the transition metal layer ($TMO_6$) can be effectively adjusted, thereby significantly reducing structural distortion and irreversible phase transition of the layered oxide represented by the chemical formula during intercalation and deintercalation of sodium, and significantly improving the structural stability of the layered oxide, thereby significantly improving the cycling stability of a reversible capacity of the layered oxide. Further, controlling the content ratios of the metal elements can further increase a gram capacity of the layered oxide while effectively improving the structural stability of the layered oxide. Further, the Zn element with a low content can also significantly reduce the segregation phenomenon of the transition metal elements on the surface of the layered oxide represented by the chemical formula, improve the air stability of the layered oxide represented by the chemical formula in air, and avoid slurry agglomeration and gelation, thereby improving the processing performance of the layered oxide represented by the chemical formula while improving the electrochemical performance.

In some embodiments, at least one of q, x, y, z, p, and i is in the following value ranges: $0.15 \leq x \leq 0.25$, $0.25 \leq y \leq 0.45$, $0.25 \leq z \leq 0.32$, $0.04 \leq p \leq 0.07$, and $0 \leq i \leq 0.05$.

By further selecting and controlling a stoichiometric ratio of at least one element among Na, Ni, Mn, Fe, Zn, and M in this range, the doping of the transition metal layer in the layered oxide represented by the chemical formula by the Zn element or both the Zn element and the doping metal element represented by M can be further improved, so that the arrangement between the metal elements in the transition metal layer is further adjusted, thereby further improving the structural stability of the layered oxide represented by the chemical formula during intercalation and deintercalation of sodium, and improving the gram capacity utilization and the cycling stability of the reversible capacity of the layered oxide.

In some embodiments, a ratio of a total stoichiometric content of the Ni element, the Mn element, the Fe element, the Zn element, and the doping metal element to a stoichiometric content of the Na element is 1:(0.8 to 1), optionally 1:(0.83 to 0.95).

Controlling the stoichiometric ratio of the Na element to other metal elements contained in the layered oxide represented by the chemical formula in this range can further improve the gram capacity of the layered oxide and the cycling stability of the reversible capacity.

In some embodiments, a stoichiometric ratio of the Zn element to the Ni element is 1:(3 to 15), optionally 1:(3.1 to 11).

The stoichiometric ratio of the Zn element to the Ni element is controlled in this range. The stoichiometric ratio of the Zn element to the Ni element in this range can increase the gram capacity of the layered oxide represented by the chemical formula while reducing the costs.

In some embodiments, a stoichiometric ratio of the Zn element to the Mn element is 1:(4 to 25), optionally 1:(5 to 15).

Controlling the stoichiometric ratio of the Zn element to the Mn element in this range can adjust the Jahn-Teller effect involving Mn in the transition metal layer while increasing the gram capacity, further reducing structural distortion and irreversible phase transition of the layered oxide represented by the chemical formula during intercalation and deintercalation of sodium, thereby further improving the structural stability of the layered oxide.

In some embodiments, the doping metal element includes at least one of V, Ca, Cr, Al, Sc, Sn, Sb, Zr, Nb, Ti, Mg, Cu, Ru, and Ir. The doping metal element represented by M can further dope the transition metal layer contained in the layered oxide represented by the chemical formula together with the Zn element with the low content, adjust the arrangement between the metal elements in the transition metal layer, and further improve the structural stability and/or gram capacity of the layered oxide represented by the chemical formula during intercalation and deintercalation of sodium according to the type of the doping metal element represented by M.

In some embodiments, the layered oxide includes at least one of $Na_{0.89}Ni_{0.23}Mn_{0.45}Fe_{0.3}Zn_{0.02}O_2$, $Na_{0.89}Ni_{0.23}Mn_{0.44}Fe_{0.3}Zn_{0.03}O_2$, $Na_{0.85}Ni_{0.23}Mn_{0.42}Fe_{0.28}Zn_{0.04}Cu_{0.02}O_2$, $Na_{0.89}Ni_{0.23}Mn_{0.42}Fe_{0.3}Zn_{0.05}O_2$, $Na_{0.89}Ni_{0.23}Mn_{0.41}Fe_{0.3}Zn_{0.06}O_2$, $Na_{0.89}Ni_{0.23}Mn_{0.42}Fe_{0.285}Zn_{0.065}O_2$, $Na_{0.89}Ni_{0.23}Mn_{0.42}Fe_{0.28}Zn_{0.07}O_2$, $Na_{0.9}Ni_{0.23}Mn_{0.4}Fe_{0.3}Zn_{0.075}O_2$, $Na_{0.85}Ni_{0.23}Mn_{0.42}Fe_{0.28}Zn_{0.04}V_{0.02}O_2$, $Na_{0.85}Ni_{0.23}Mn_{0.42}Fe_{0.28}Zn_{0.04}Cr_{0.02}O_2$, $Na_{0.85}Ni_{0.23}Mn_{0.42}Fe_{0.28}Zn_{0.04}Al_{0.02}O_2$, $Na_{0.85}Ni_{0.23}Mn_{0.42}Fe_{0.28}Zn_{0.04}Sc_{0.02}O_2$, $Na_{0.85}Ni_{0.23}Mn_{0.42}Fe_{0.28}Zn_{0.04}Sn_{0.02}O_2$, $Na_{0.85}Ni_{0.23}Mn_{0.42}Fe_{0.28}Zn_{0.04}Sb_{0.02}O_2$, $Na_{0.85}Ni_{0.23}Mn_{0.42}Fe_{0.28}Zn_{0.04}Zr_{0.02}O_2$, $Na_{0.85}Ni_{0.23}Mn_{0.42}Fe_{0.28}Zn_{0.04}Nb_{0.02}O_2$, $Na_{0.85}Ni_{0.23}Mn_{0.42}Fe_{0.28}Zn_{0.04}Ti_{0.02}O_2$, $Na_{0.85}Ni_{0.23}Mn_{0.42}Fe_{0.28}Zn_{0.04}Mg_{0.02}O_2$, $Na_{0.85}Ni_{0.23}Mn_{0.42}Fe_{0.28}Zn_{0.04}Ru_{0.02}O_2$, $Na_{0.85}Ni_{0.23}Mn_{0.42}Fe_{0.28}Zn_{0.04}Ir_{0.02}O_2$, and $Na_{0.85}Ni_{0.23}Mn_{0.42}Fe_{0.28}Zn_{0.04}Ir_{0.02}O_{1.8}$.

The content of the Zn element in the layered oxide represented by the chemical formula is low, and the Zn element with the content interacts with metal elements with other contents, allowing for formation of a specific arrangement between the metal elements in the transition metal layer contained in the layered oxide, thereby further improving the structural stability of the layered oxide during intercalation and deintercalation of sodium, improving the gram capacity of the layered oxide and the cycling stability of the reversible capacity, and improving the electrochemical performance and processing performance while improving the gram capacity of the layered oxide represented by the chemical formula.

In some embodiments, the layered oxide includes at least one of the following characteristics (1) to (3):

(1) a crystal structure includes an O3-phase layered metal oxide, and the O3-phase layered metal oxide accounts for 95% or more of a total weight of the layered oxide;
(2) a particle size $D_v50$ is 3 $\mu$m to 11 $\mu$m, optionally 4 $\mu$m to 8 $\mu$m; and
(3) a single crystal is included, where the single crystal is flat in morphology.

In the embodiments, the single crystal includes at least one of the following characteristics (1) to (4):

(1) a ratio of a length, a width, and a thickness is (1 to 8):(1 to 5):(0.5 to 2.5), optionally (2 to 6):(2 to 4):(1 to 2);
(2) the length is 1 $\mu$m to 8 $\mu$m, optionally 2 $\mu$m to 6 $\mu$m;
(3) the width is 1 $\mu$m to 5 $\mu$m, optionally 2 $\mu$m to 4 $\mu$m; and

(4) the thickness is 0.5 μm to 2.5 μm, optionally 1 μm to 2 μm.

According to the above embodiments, the layered oxide represented by the chemical formula is mainly an O3-phase layered metal oxide and includes a single-crystal structure.

In some embodiments, the layered oxide includes at least one of the following characteristics (1) to (3):

(1) a compacted density under a pressure of 2 tons is 2.8 g/cm$^3$ to 3.1 g/cm$^3$, optionally 2.9 g/cm$^3$ to 3.09 g/cm$^3$;
(2) a compacted density under a pressure of 3 tons is 3.1 g/cm$^3$ to 3.3 g/cm$^3$, optionally 3.15 g/cm$^3$ to 3.28 g/cm$^3$; and
(3) a specific surface area is 0.5 m$^2$/g to 1.3 m$^2$/g, optionally 0.6 m$^2$/g to 0.9 m$^2$/g.

Based on the particle size $D_v50$ of the layered oxide represented by the above chemical formula (I) and a single crystal size distribution range of the O3-phase layered metal oxide contained in the layered oxide, the layered oxide has a high compacted density, thereby increasing the energy density of a battery. In addition, the layered oxide has an appropriate specific surface area, which can improve the performance such as the stability of a contact interface between the layered oxide and an electrolyte, thereby improving the electrochemical performance such as the cycling performance.

In some embodiments, the layered oxide at 1.5 V to 4.2 V and 0.1C includes at least one of the following characteristics (1) to (3):

(1) a charge gram capacity is 164 mAh/g to 174 mAh/g, optionally 165 mAh/g to 172 mAh/g;
(2) a discharge gram capacity is 158 mAh/g to 165 mAh/g, optionally 160 mAh/g to 163 mAh/g; and
(3) initial efficiency is 92% to 98%, optionally 92% to 95%.

The structural stability of the layered oxide represented by the above chemical formula is significantly improved, allowing for structural stability during intercalation and deintercalation of sodium, a high gram capacity, and good cycling stability of the reversible capacity.

According to a second aspect, an embodiment of this application provides a preparation method of a positive electrode material. The preparation method of a positive electrode material according to this embodiment of this application includes the following steps:

providing a precursor of Na$_q$Ni$_x$Mn$_y$Fe$_z$Zn$_p$M$_i$O$_j$; and
performing sintering treatment on the precursor to obtain a layered oxide with a chemical formula Na$_q$Ni$_x$Mn$_y$Fe$_z$Zn$_p$M$_i$O$_j$;
where 0.8≤q≤1, 0.1≤x≤0.3, 0.2≤y≤0.5, 0.2≤z≤0.35, 0.02≤p≤0.075, 0≤i≤0.1, 1.8≤j≤2, and x+y+z+p+i≤1; and M is an active and/or inert doping metal element.

In the preparation method of a positive electrode material according to this embodiment of this application, a low-zinc layered oxide with the chemical formula Na$_q$Ni$_x$Mn$_y$Fe$_z$Zn$_p$M$_i$O$_j$ is generated by sintering the precursor of Na$_q$Ni$_x$Mn$_y$Fe$_z$Zn$_p$M$_i$O$_j$. Therefore, the content of the zinc element in the layered oxide prepared by the preparation method of the positive electrode material according to this embodiment of this application is low, and the structural stability during intercalation and deintercalation of sodium is high, so that the prepared layered oxide has a high gram capacity and cycling stability of a reversible capacity, and also has the performance such as high air stability and diffusion rate. In addition, the conditions for performing the sintering treatment on the precursor of Na$_q$Ni$_x$Mn$_y$Fe$_z$Zn$_p$M$_i$O$_j$ can be effectively controlled, thereby improving the structural stability and electrochemical performance of the layered oxide with the chemical formula Na$_q$Ni$_x$Mn$_y$Fe$_z$Zn$_p$M$_i$O$_j$.

In some embodiments, the doping metal element includes at least one of V, Ca, Cr, Al, Sc, Sn, Sb, Zr, Nb, Ti, Mg, Cu, Ru, and Ir. These doping metal elements can further dope the transition metal layer contained in the layered oxide represented by the chemical formula together with the Zn element with the low content, adjust the arrangement between metal elements in the transition metal layer, and further improve the structural stability and/or gram capacity of the layered oxide represented by the chemical formula during intercalation and deintercalation of sodium according to the type of the doping metal element.

In some embodiments, at least one of q, x, y, z, p, and i is in the following value ranges:
0.15≤x≤0.25, 0.25≤y≤0.45, 0.25≤z≤0.32, 0.04≤p≤0.07, and 0≤i≤0.05.

By further adjusting a ratio of the metal elements in the precursor of Na$_q$Ni$_x$Mn$_y$Fe$_z$Zn$_p$M$_i$O$_j$ in this range, the arrangement between metal elements in the prepared layered oxide can be further adjusted, thereby further improving the structural stability of the prepared layered oxide during intercalation and deintercalation of sodium, and improving the gram capacity utilization and the cycling stability of the reversible capacity of the layered oxide.

In some embodiments, the sintering treatment includes at least one of the following conditions (1) to (4):

(1) a temperature is 700°C to 980°C, optionally 750°C to 950°C;

(2) a time is 4 h to 20 h, optionally 6 h to 12 h; and

(3) a temperature is increased to a sintering treatment temperature at a heating rate of 2°C/min to 15°C/min.

By controlling the conditions of the sintering treatment in the above ranges, the structural stability of the $Na_qNi_xMn_yFe_zZn_pM_iO_j$ layered oxide during intercalation and deintercalation of sodium can be further improved, further improving the high gram capacity of the layered oxide and the cycling stability of its reversible capacity. In addition, the content of an O3-phase layered metal oxide and the content of a single crystal in the $Na_qNi_xMn_yFe_zZn_pM_iO_j$ layered oxide can also be increased, and a size of the single crystal and a particle size of the layered oxide can be controlled, thereby increasing a compacted density of the layered oxide.

In some embodiments, the precursor of $Na_qNi_xMn_yFe_zZn_pM_iO_j$ is prepared in a method including the following step:

performing solid-phase mixing treatment on a sodium source, a nickel source, a manganese source, an iron source, a zinc source, and a doping metal element source represented by M according to an elemental stoichiometric ratio in $Na_qNi_xMn_yFe_zZn_pM_iO_j$, to obtain the precursor.

The precursor of $Na_qNi_xMn_yFe_zZn_pM_iO_j$ is prepared using the solid-phase method, so that the stoichiometric ratios of the elements can be effectively controlled, and the preparation effect of the precursor can be improved.

In some embodiments, the precursor of $Na_qNi_xMn_yFe_zZn_pM_iO_j$ is prepared in a method including the following steps:

preparing a mixed solution from a soluble nickel source, a soluble manganese source, a soluble iron source, a soluble zinc source, and a soluble doping metal element source represented by M according to an elemental stoichiometric ratio in $Na_qNi_xMn_yFe_zZn_pM_iO_j$, and adding at least one of a precipitant and a complexing agent for co-precipitation treatment to obtain a precipitate mixture; and

mixing the precipitate mixture with a sodium source to obtain the precursor.

The precursor of $Na_qNi_xMn_yFe_zZn_pM_iO_j$ is prepared using the co-precipitation method, so that the accuracy of the stoichiometric ratios of the elements can be improved.

According to a third aspect, an embodiment of this application provides a positive electrode. The positive electrode according to this embodiment of this application includes a current collector and a positive electrode active material layer provided on a surface of the current collector, where the positive electrode active material layer includes the positive electrode material in the embodiments of this application or a positive electrode material prepared by the preparation method of a positive electrode material in the embodiments of this application.

Since the positive electrode active material layer of the positive electrode according to this embodiment of this application contains the positive electrode material according to the above embodiments of this application, the positive electrode has a relatively high gram capacity and good cycling performance.

In some embodiments, a content of the positive electrode active material layer on one surface of the current collector is 260 mg/1540.25mm² to 350 mg/1540.25mm², optionally 280 mg/1540.25mm² to 320 mg/1540.25mm². The positive electrode active material layer in this content range can effectively increase the gram capacity of the positive electrode, thereby increasing the energy density of a battery.

In some embodiments, a compacted density of the positive electrode active material layer is 2.8 g/cm³ to 3.4 g/cm³, optionally 2.9 g/cm³ to 3.2 g/cm³. The compacted density in this range can effectively increase the gram capacity of the positive electrode, thereby increasing the energy density of the battery, and allowing for good stability of a contact interface with an electrolyte.

In some embodiments, a porosity of the positive electrode active material layer is 40% to 65%, optionally 45% to 60%. The porosity in this range can make the positive electrode active material layer have the above compacted density, and increase the gram capacity of the positive electrode, thereby increasing the energy density of the battery, and improving the infiltration of the electrolyte.

In some embodiments, the positive electrode is an electrode plate, and a sheet resistance of the electrode plate is 0.5 mΩ to 5 mΩ, optionally 0.5 mΩ to 3 mΩ. The sheet resistance in this range can effectively improve the performance such as the efficiency and the service life.

In some embodiments, the positive electrode is an electrode plate, and a ratio of a thickness from one surface to another opposite surface of the electrode plate to a thickness of the current collector is (6 to 15):1, optionally (8 to 14):1.

By controlling the total thickness of the electrode plate and the thickness of the current collector in the above ratio range, the gram capacity of the electrode plate can be effectively increased, thereby increasing the energy density of the battery. In addition, the bonding strength between the positive electrode active material layer and the current collector can be improved, the mechanical strength of the electrode plate structure can be improved, and the cycling performance of the electrode plate can be improved.

In some embodiments, the conductive agent contained in the positive electrode active material layer includes a linear conductive agent.

In the embodiments, a mass percentage of the linear conductive agent in the positive electrode active material layer is 0.1% to 2.5%, optionally 0.2% to 0.8%.

In the embodiments, an aspect ratio of the linear conductive agent is (40 to 3000):1, optionally (50 to 2500):1.

In the embodiments, a length of the linear conductive agent is 0.5 $\mu$m to 5 $\mu$m, optionally 0.5 $\mu$m to 2 $\mu$m.

In the embodiments, a diameter of the linear conductive agent is 2 nm to 10 nm, optionally 3 nm to 7 nm.

In an exemplary embodiment, the linear conductive agent includes at least one of carbon nanotubes, carbon fiber, and conductive oxide nanowires.

The linear conductive agent is added to the positive electrode active material layer, the content of the linear conductive agent is controlled in this range, and the type, aspect ratio, length, and diameter of the linear conductive agent are selected and controlled in the above range, so that the linear conductive agent can form a rich conductive network structure in the positive electrode active material layer, and the linear conductive agent can also wrap around the surface of flat single crystal particles. A particulate conductive agent can be effectively dispersed in gaps of the positive electrode material. In this way, the linear conductive agent constructs a long-range conductive network structure in the positive electrode active material layer, and the particulate conductive agent constitutes a short-range conductive structure. Therefore, the conductive synergistic effect of the linear conductive agent and the particulate conductive agent in the positive electrode active material layer effectively improves the conductivity of the positive electrode active material layer, and can significantly reduce the internal resistance of the positive electrode.

According to a fourth aspect, an embodiment of this application provides a sodium battery. The sodium battery according to this embodiment of this application includes the positive electrode according to the above embodiments of this application.

Since the sodium battery according to this embodiment of this application includes the positive electrode according to the above embodiments of this application, the sodium battery according to this embodiment of this application has a high energy density and good cycling performance.

According to a fifth aspect, an embodiment of this application provides an electric apparatus. This embodiment of this application includes the sodium battery according to the above embodiment of this application.

The electric apparatus according to this embodiment of this application has long standby or endurance time and long service life.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

## BRIEF DESCRIPTION OF DRAWINGS

Those of ordinary skill in the art will be clear about various other advantages and benefits by reading the detailed description of the preferred Examples Below. The accompanying drawings are merely intended to illustrate the preferred embodiments and are not intended to limit this application. Moreover, throughout the accompanying drawings, the same reference signs represent the same parts. In the drawings:

FIG. 1 is a scanning electron microscope (SEM) image of a layered oxide provided in Example A6 of this application;
FIG. 2 is a schematic diagram of a single-crystal structure of a layered oxide contained in a positive electrode material according to some embodiments of this application;
FIG. 3 is a schematic structural diagram of a positive electrode according to some embodiments of this application;
FIG. 4 is another schematic structural diagram of a positive electrode according to some embodiments of this application;
FIG. 5 is a schematic structural diagram of an implementation of a sodium battery cell according to an embodiment of this application;
FIG. 6 is a schematic exploded view of the sodium battery cell shown in FIG. 5;
FIG. 7 is a schematic structural diagram of an implementation of a battery module according to an embodiment of this application;
FIG. 8 is a schematic structural diagram of an implementation of a battery pack according to an embodiment of this application;
FIG. 9 is a schematic structural exploded view of the battery pack shown in FIG. 8; and
FIG. 10 is a schematic diagram of an implementation of an electric apparatus including a battery according to an embodiment of this application as a power source.

The reference signs in the specific embodiments are as follows:

10. positive electrode; 11. current collector; 12. positive electrode active material layer;
20. battery cell; 21. housing; 22. electrode assembly; 23. cover plate;
30. battery module;
40. battery pack; 41. upper box body; and 42. lower box body.

## DESCRIPTION OF EMBODIMENTS

The embodiments of the technical solutions of this application will be described in detail below with reference to the accompanying drawings. The following embodiments are only used to illustrate the technical solutions of this application more clearly, and thus are only examples and cannot be used to limit the protection scope of this application.

Unless otherwise defined, all technical and scientific terms used herein have the same meaning as commonly understood by those skilled in the technical field to which this application belongs; the terms used herein are only for the purpose of describing specific embodiments and are not intended to limit this application; and the terms "include", "comprise", "have", and any variations thereof in the specification and claims of this application and the above description of the drawings are intended to cover non-exclusive inclusion.

In the description of the embodiments of this application, the technical terms "first", "second", and the like are only used to distinguish different objects, and cannot be understood as indicating or implying relative importance or implicitly indicating the number, specific order, or primary-secondary relationship of the indicated technical features. In the description of the embodiments of this application, "a plurality of" means at least two, unless otherwise specifically defined.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this application, the term "and/or" is merely an association describing associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of these embodiments of this application rather than indicating or implying that the means or components mentioned must have specific orientations or must be constructed or manipulated according to specific orientations, and therefore shall not be construed as any limitations on these embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meaning of the above terms in the embodiments of this application can be understood according to specific circumstances.

Sodium-ion batteries (sodium-ion battery, abbreviated as SIBs) have become ideal candidates for energy storage systems due to abundant raw material reserves and low costs. Moreover, sodium-ion batteries have a huge application space in the new energy vehicle market. With the rapid development of energy storage systems and new energy vehicles, the requirements for energy density and cycling stability of sodium-ion batteries are also increasing.

For a sodium-ion battery, a sodium-ion battery positive electrode material can provide active sodium ions, which is an important component of the sodium-ion battery and is also one of the important factors affecting the energy density and cycling performance of the sodium-ion battery. In the sodium-ion battery positive electrode material, a layered oxide has attracted much attention due to its high gram capacity and structure similar to a lithium-ion battery positive electrode material.

According to a stacking order of oxygen atoms in the layered oxide, the layered oxide is currently mainly divided into P2 type and O3 type. For example, a currently more representative P2 layered oxide $Na_{2/3}Ni_{1/3}Mn_{2/3}O_2$ has a high capacity, but it is prone to $P_2$-$O_2$ phase transition during intercalation and deintercalation of sodium. This phase transition leads to structural damage of $Na_{2/3}Ni_{1/3}Mn_{2/3}O_2$, causing the capacity decay and reducing the cycle life. Compared with a P2-type layered oxide, an O3-type layered oxide can store more $Na^+$ and can also exhibit a higher reversible capacity in a same voltage range, thus the O3-type layered oxide has a better commercialization prospect. However, the diffusion of $Na^+$ in the O3-type layered oxide requires additional energy to pass through a diffusion energy barrier. Therefore, most O3-type layered oxides such as $NaMn_{0.5}Ni_{0.5}O_2$ layered oxide will have complex phase transition processes during charging and discharging, especially the irreversible P3" phase transition occurring at a high voltage above 4.1 V. Such phase transition leads to structural damage of the O3-type layered oxide, causing the capacity decay and reducing the cycle life.

Therefore, the current layered oxide has poor structural stability and is prone to phase transition during intercalation and deintercalation of sodium, leading to structural deformation, and resulting in severe decay of the reversible capacity of layered oxide during cycling, thus causing fast cycling decay of the sodium-ion battery. In order to improve the crystal structural stability of the layered oxide during intercalation and deintercalation of sodium and electrochemical performances such as the reversible capacity and the cycling performance, there are currently reports of heterogeneous element doping treatment on the layered oxide. Although the crystal structural stability and the electrochemical performance such as the cycling performance of the layered oxide after doping are improved, the improvement is not obvious. For example, it is currently generally believed that when the zinc element is used to dope the layered oxide, since the zinc element does not participate in the redox reaction of the layered oxide during charging and discharging, the zinc element can play a role of a stabilizer to reduce structural distortion and slippage of the layered oxide during charging and discharging, thereby improving the structural stability of the layered oxide, and improving its reversible capacity and cycling performance. In addition, it is currently generally believed that with the increase of a doping amount of the zinc element, its role of the stabilizer is also obvious, which can further reduce structural distortion and slippage of the layered oxide during charging and discharging, and improve the structural stability of the layered oxide. Therefore, it is currently generally believed that controlling the doping amount of the zinc element to be relatively high is beneficial to the structural stability of the layered oxide. In the layered oxide, a molar doping amount of the zinc element is conventionally 8% or more.

However, through research, it has been unexpectedly found that reducing the doping content of the zinc element can effectively alleviate the phenomenon of premature structural phase transition in a nickel-manganese layered oxide, reduce the phase transition of the nickel-manganese layered oxide during charging and discharging, and significantly improve the crystal structural stability of the nickel-manganese layered oxide during intercalation and deintercalation of sodium, thereby improving the stability of a gram capacity and reversible capacity of the nickel-manganese layered oxide during cycling. Based on the above research, an embodiment of this application provides the following technical solutions.

**Positive electrode material**

According to a first aspect, an embodiment of this application provides a low-zinc-doped positive electrode material. In some embodiments, the positive electrode material according to this embodiment of this application includes a layered oxide represented by the following chemical formula (I):

$$Na_qNi_xMn_yFe_zZn_pM_iO_j \qquad (I);$$

where in the chemical formula (I), $0.8 \leq q \leq 1$, $0.1 \leq x \leq 0.3$, $0.2 \leq y \leq 0.5$, $0.2 \leq z \leq 0.35$, $0.02 \leq p \leq 0.075$, $0 \leq i \leq 0.1$, $1.8 \leq j \leq 2$, and $x+y+z+p+i \leq 1$; and M is an active and/or inert doping metal element.

In the chemical formula (I) of the layered oxide contained in the positive electrode material according to this embodiment of this application, q, x, y, z, p, i, and j sequentially represent stoichiometric ratios of Na, Ni, Mn, Fe, Zn, and the doping metal element represented by M, and O in the layered oxide. Therefore, the stoichiometric ratios of Na, Ni, Mn, Fe, Zn, M, and O contained in the layered oxide may be (0.8 to 1):(0.1 to 0.3):(0.2 to 0.5):(0.2 to 0.35):(0.02 to 0.075):(t to 0.1):(1.8 to 2); where $0 \leq t < 0.1$. In addition, the stoichiometric ratios of the Na, Ni, Mn, Fe, Zn, M, and the doping metal element represented by O may be molar ratios or mass ratios converted from molar ratios. The active doping metal element represented by M refers to a type of metal element that has electrochemical redox activity in the layered oxide and mainly contributes to a gram capacity of the layered oxide. The inert doping metal element represented by M is relative to the active doping metal element, and refers to a type of metal element that has relatively stable electrochemical redox activity in the layered oxide and mainly contributes to the crystal structural stability of the layered oxide. The layered oxide refers to a positive electrode material composed of octahedra of transition metal layers ($TMO_6$) containing the Ni, Mn, and Fe elements and alkali metal layers of sodium layers ($NaO_6$) alternately arranged.

In the layered oxide contained in the positive electrode material according to this embodiment of this application, the transition metal layer ($TMO_6$) containing the Ni, Fe, and Mn elements is doped with the Zn element or the Zn element further together with the doping metal element represented by M, and the doping amount of the Zn element is controlled in a low content range represented by p, so that the Zn element and the Fe element or the Zn element further together with the Fe element and the doping metal element represented by M can jointly participate in the arrangement between metal elements in the transition metal layer contained in the layered oxide crystal, mainly the disordered arrangement, which can suppress the Jahn-Teller effect brought by the Mn element in the layered oxide represented by the chemical formula (I) and multiple structural phase transitions brought by excessive nickel elements. Compared with the current layered oxide with a high content of the zinc element, the structural phase transition of the layered oxide represented by the chemical formula (I) can be reduced, the structural distortion and irreversible phase transition of the layered oxide represented by the chemical formula (I) during intercalation and deintercalation of sodium can be significantly reduced, and the structural stability of the layered oxide can be significantly improved, thereby improving the cycling stability of the reversible capacity of the layered oxide. In addition, controlling the content ratios of the metal elements can increase the gram capacity of the layered oxide while effectively improving the structural stability of the layered oxide. Moreover, the content ratios of the metal elements can also effectively adjust spacings between transition metal elements in the transition metal layer ($TMO_6$), thereby controlling the deintercalation amount of sodium, improving the structural distortion and irreversible phase transition of the layered oxide during intercalation and deintercalation of sodium, and significantly improving the structural stability of the layered oxide.

Further, the Zn element with a low content in the above layered oxide represented by the chemical formula (I) can also significantly reduce the segregation phenomenon of the transition metal elements on the surface of the layered oxide represented by the chemical formula (I), improve the air stability of the layered oxide represented by the chemical formula (I) in air, and avoid slurry agglomeration and gelation, thereby improving the processing performance of the layered oxide represented by the chemical formula (I) while improving the electrochemical performance. In addition, the transition metal layer ($TMO_6$) containing the Ni, Fe, and Mn elements is doped with the Zn element with a low content or the Zn element further together with the doping metal element represented by M, which can effectively suppress the ordered transformation of $Na^+$ and vacancies in the layered oxide during charging and discharging, reduce the diffusion energy barrier of $Na^+$, and increase the diffusion rate of sodium ions contained in the layered oxide.

In an exemplary embodiment, in the chemical formula (I) of the layered oxide contained in the positive electrode material according to this embodiment of this application, a stoichiometric content q of the Na element may be selected from typical but non-limiting stoichiometric contents such as 0.8, 0.85, 0.9, 0.95, 1.0, or a range defined by any two of these stoichiometric content values. The Na element in this content range increases the reversible capacity of the layered oxide represented by the chemical formula (I).

In some embodiments, in the chemical formula (I) of the layered oxide contained in the positive electrode material according to this embodiment of this application, a stoichiometric content x of the Ni element may further satisfy $0.15 \leq x \leq 0.25$. Based on the value range of x in the chemical formula (I), in an exemplary embodiment, x may be selected from typical but non-limiting stoichiometric contents such as 0.1, 0.15, 0.16, 0.17, 0.18, 0.19, 0.20, 0.25, 0.3, or a range defined by any two of these stoichiometric content values. The Ni element in this content range can effectively reduce the content of non-active impurity phases such as NiO in the layered oxide under the co-doping of the Zn element and the Fe element or the co-doping of the Zn element, the Fe element, and the doping metal element represented by M, thereby further improving the structural stability of the layered oxide during intercalation and deintercalation of sodium. In addition, the Zn element and the Fe element, or a combination of the Zn element, the Fe element, and the doping metal element represented by M can also replace part of the Ni element, reducing the content of Ni, thereby reducing the cost of the layered oxide without reducing the gram capacity of the layered oxide represented by the chemical formula (I).

In some embodiments, in the chemical formula (I) of the layered oxide contained in the positive electrode material according to this embodiment of this application, a stoichiometric content y of the Mn element may further satisfy $0.25 \leq y \leq 0.45$. Based on the value range of y in the chemical formula (I), in an exemplary embodiment, y may be selected from typical but non-limiting stoichiometric contents such as 0.2, 0.23, 0.25, 0.28, 0.3, 0.33, 0.35, 0.38, 0.4, 0.43, 0.45, 0.48, 0.5, or a range defined by any two of these stoichiometric content values. The Mn element in this stoichiometric content range can reduce the Jahn-Teller effect brought by the Mn element and the Ni element under the co-doping of the Zn element and the Fe element or the co-doping of the Zn element, the Fe element, and the doping metal element represented by M, further improving the structural stability of the layered oxide during intercalation and deintercalation of sodium. In addition, the layered oxide represented by the chemical formula (I) has a larger average oxidation state and lattice space, thereby increasing the diffusion rate of Na ions.

In some embodiments, in the chemical formula (I) of the layered oxide contained in the positive electrode material according to this embodiment of this application, a stoichiometric content z of the Fe element may further satisfy $0.25 \leq z \leq 0.32$. Based on the value range of z in the chemical formula (I), in an exemplary embodiment, z may be selected from typical but non-limiting stoichiometric contents such as 0.2, 0.25, 0.26, 0.27, 0.28, 0.29, 0.3, 0.31, 0.32, 0.33, 0.34, 0.35, or a range defined by any two of these stoichiometric content values. The Fe element in this stoichiometric content range can perform co-doping on the transition metal layer in the layered oxide represented by the chemical formula (I) with the Zn element or both the Zn element and the doping metal element represented by M, further improving the structural stability of the layered oxide represented by the chemical formula (I) during intercalation and deintercalation of sodium. In addition, the Fe element replaces part of the Ni element, reducing the content of the Ni element while increasing the gram capacity of the layered oxide represented by the chemical formula (I), thereby reducing the cost of the layered oxide represented by the chemical formula (I).

In some embodiments, in the chemical formula (I) of the layered oxide contained in the positive electrode material according to this embodiment of this application, a stoichiometric content p of the Zn element may satisfy $0.04 \leq p \leq 0.07$ and further satisfy $0.04 \leq p \leq 0.065$. Based on the value range of p in the chemical formula (I), in an exemplary embodiment, p may be selected from typical but non-limiting stoichiometric contents such as 0.02, 0.025, 0.025, 0.03, 0.03, 0.035, 0.04, 0.045, 0.045, 0.05, 0.05, 0.055, 0.055, 0.06, 0.06, 0.065, 0.07, 0.075, or a range defined by any two of these stoichiometric content values. The Zn element in this stoichiometric content range or the Zn element further together with the doping metal element represented by M can improve the doping of the transition metal layer contained in the layered oxide represented by the chemical formula (I), further improving the structural stability of the layered oxide represented by the chemical formula (I) during intercalation and deintercalation of sodium, and further balancing the electrochemical performance and processing performance of the positive electrode material.

In some embodiments, in the chemical formula (I) of the layered oxide contained in the positive electrode material according to this embodiment of this application, a stoichiometric content i of the doping metal element represented by M may further satisfy $0 \leq i \leq 0.05$. Based on the value range of i in the chemical formula (I), in an exemplary embodiment, i may be selected from typical but non-limiting stoichiometric contents such as 0, 0.01, 0.02, 0.03, 0.05, 0.06, 0.07, 0.08, 0.09, 0.1, or a range defined by any two of these stoichiometric content values. The doping metal element represented by M in this stoichiometric content range can assist the Zn element with the low content in further improving the doping of the transition metal layer contained in the layered oxide represented by the chemical formula (I), adjusting the arrangement between the metal elements in the transition metal layer, thereby further improving the structural stability of the layered oxide represented by the chemical formula (I) during intercalation and deintercalation of sodium, and further improving its gram capacity and/or the cycling stability of the reversible capacity.

In an exemplary embodiment, in the chemical formula (I) of the layered oxide contained in the positive electrode material according to this embodiment of this application, a stoichiometric content j of O may be selected from typical but non-limiting stoichiometric contents such as 1.8, 1.9, 2, or a range defined by any two of these stoichiometric content values.

In this embodiment, the active and/or inert doping metal element represented by M may include at least one of V, Ca, Cr, Al, Sc, Sn, Sb, Zr, Nb, Ti, Mg, Cu, Ru, Ir, and the like. The active doping metal element represented by M may include at least one metal element of V, Ca, Cr, Nb, Cu, Sc, Sn, Sb, and the like. The inert doping metal element represented by M may include at least one metal element of Zr, Mg, Ru, Ir, Al, Ti, and the like. Selecting and controlling the active and/or inert doping metal element represented by M in these elements can further improve the doping of the transition metal layer contained in the layered oxide represented by the chemical formula (I) together with the Zn element with the low content, adjusting the arrangement between the metal elements in the transition metal layer, and further improving the structural stability and/or gram capacity of the layered oxide represented by the chemical formula (I) during intercalation and deintercalation of sodium according to the type of the doping metal element represented by M.

Based on the value ranges of q, x, y, z, p, i according to the above embodiments, in some embodiments, the value ranges of q, x, y, z, p, i in the chemical formula (I) of the layered oxide are simultaneously as follows: $0.8 \leq q \leq 1$, $0.15 \leq x \leq 0.25$, $0.25 \leq y \leq 0.45$, $0.25 \leq z \leq 0.32$, $0.04 \leq p \leq 0.07$, and $0 \leq i \leq 0.05$. In this case, the stoichiometric ratios of Na, Ni, Mn, Fe, Zn, and the doping metal element represented by M contained in the layered oxide represented by the chemical formula (I) may be (0.8 to 1):(0.15 to 0.25):(0.25 to 0.45):(0.25 to 0.32):(0.04 to 0.065):(t to 0.05); where $0 \leq t < 0.05$. Selecting and controlling the stoichiometric ratios of Na, Ni, Mn, Fe, Zn, or Na, Ni, Mn, Fe, Zn, and the doping metal element represented by M in the ranges can further improve the doping of the transition metal layer in the layered oxide represented by the chemical formula (I) by the Zn element or both the Zn element and the doping metal element represented by M, thereby further improving the structural stability of the layered oxide represented by the chemical formula (I) during intercalation and deintercalation of sodium, adjusting the arrangement between the metal elements in the transition metal layer, and improving the gram capacity of the layered oxide and the cycling stability of the reversible capacity. In addition, the electrochemical performance and processing performance of the layered oxide can also be further improved.

Based on the value ranges of q, x, y, z, p, i according to the above embodiments, in some embodiments, a ratio of a total stoichiometric content of Ni, Mn, Fe, Zn, and the doping metal element represented by M in the chemical formula (I) of the layered oxide to a stoichiometric content of the Na element is 1:(0.8 to 1), optionally 1:(0.85 to 0.95), and further 1:(0.85 to 0.92). In an exemplary embodiment, the ratio may be selected from typical but non-limiting molar ratios such as 1:0.8, 1:0.82, 1:0.85, 1:0.88, 1:0.9, 1:0.95, 1:1, or a range defined by any two of these stoichiometric ratio values. The stoichiometric content may be a molar quantity and a mass converted based on the molar quantity. Controlling a stoichiometric ratio of the Na element to other metal elements contained in the layered oxide represented by the chemical formula (I) in this range can further increase the content of sodium ions and increase the content of sodium ions intercalated and deintercalated in the layered oxide, thereby increasing the gram capacity of the layered oxide. In addition, the sodium ions in this content range can improve the O3 crystal phase content of the layered oxide represented by the chemical formula (I), making the layered oxide represented by the chemical formula (I) mainly exhibit O3 crystal, thereby improving the structural stability of the layered oxide represented by the chemical formula (I), and improving the cycling stability of its reversible capacity.

In some embodiments, a stoichiometric ratio of the Zn element to the Ni element in the chemical formula (I) of the layered oxide is 1:(3 to 15), optionally 1:(3.1 to 11). In an exemplary embodiment, the stoichiometric ratio may be selected from typical but non-limiting molar ratios such as 1:3, 1:3.1, 1:5, 1:8, 1:10, 1:11, 1:12, 1:15, or a range defined by any two of these stoichiometric ratio values. The stoichiometric content of each of the Zn element to the Ni element in the chemical formula (I) may be a molar quantity and a mass converted based on the molar quantity. The stoichiometric ratio of the Zn element to the Ni element in the chemical formula (I) is controlled in this range. The stoichiometric ratio of the Zn element to the Ni element in this range can further increase the gram capacity of the layered oxide represented by the chemical formula. For example, within this range, appropriately increasing this ratio value, that is, appropriately increasing the zinc content, can further increase the gram capacity of the layered oxide represented by the chemical formula.

In some embodiments, a stoichiometric ratio of the Zn element to the Mn element is 1:(4 to 25), optionally 1:(5 to 15). In an exemplary embodiment, the stoichiometric ratio may be selected from typical but non-limiting stoichiometric ratios such as 1:4, 1:5, 1:8, 1:10, 1:12, 1:15, 1:18, 1:20, 1:22, 1:25, or a range defined by any two of these stoichiometric ratio values. Similarly, the stoichiometric content of each of the Zn element to the Mn element may be a molar quantity and a mass converted based on the molar quantity. Controlling the stoichiometric ratio of the Zn element to the Mn element in this range can further adjust the content of Mn in the transition metal layer contained in the layered oxide represented by the chemical formula, thereby further reducing the Jahn-Teller effect between the Mn and Ni elements in the transition metal layer, further reducing structural distortion and irreversible phase transition of the layered oxide represented by the chemical formula during intercalation and deintercalation of sodium, thereby further improving the structural stability of the layered oxide. Certainly, the above stoichiometric ratio range of the Zn element to the Mn element can also take into account the gram capacity of the layered oxide represented by the chemical formula (I).

In addition, the Zn element to the Ni element and the Zn element to the Mn element in the chemical formula (I) may be controlled in the above stoichiometric ratio ranges respectively. In an embodiment, both the stoichiometric ratio of the Zn element to the Ni element and the stoichiometric ratio of the Zn element to the Mn element may be controlled in the above stoichiometric ratio ranges. Controlling both the stoichiometric ratio of the Zn element to the Ni element and the stoichiometric ratio of the Zn element to the Mn element in the above stoichiometric ratio ranges can make the layered oxide represented by the chemical formula (I) better balance structural stability and gram capacity, that is, allowing the layered oxide represented by the chemical formula (I) to have a relatively high gram capacity while having better cycling stability of the reversible capacity.

Based on the value ranges of q, x, y, z, p, i according to the above embodiments, in an embodiment, the layered oxide represented by the chemical formula (I) according to the above embodiments may include at least one of $Na_{0.89}Ni_{0.23}Mn_{0.45}Fe_{0.3}Zn_{0.02}O_2$, $Na_{0.89}Ni_{0.23}Mn_{0.44}Fe_{0.3}Zn_{0.03}O_2$, $Na_{0.85}Ni_{0.23}Mn_{0.42}Fe_{0.28}Zn_{0.04}Cu_{0.02}O_2$, $Na_{0.89}Ni_{0.23}Mn_{0.42}Fe_{0.3}Zn_{0.05}O_2$, $Na_{0.89}Ni_{0.23}Mn_{0.41}Fe_{0.3}Zn_{0.06}O_2$, $Na_{0.89}Ni_{0.23}Mn_{0.42}Fe_{0.285}Zn_{0.065}O_2$, $Na_{0.89}Ni_{0.23}Mn_{0.42}Fe_{0.28}Zn_{0.07}O_2$, $Na_{0.9}Ni_{0.23}Mn_{0.4}Fe_{0.3}Zn_{0.075}O_2$, $Na_{0.85}Ni_{0.23}Mn_{0.42}Fe_{0.28}Zn_{0.04}V_{0.02}O_2$, $Na_{0.85}Ni_{0.23}Mn_{0.42}Fe_{0.28}Zn_{0.04}Cr_{0.02}O_2$, $Na_{0.85}Ni_{0.23}Mn_{0.42}Fe_{0.28}Zn_{0.04}Al_{0.02}O_2$, $Na_{0.85}Ni_{0.23}Mn_{0.42}Fe_{0.28}Zn_{0.04}Sc_{0.02}O_2$, $Na_{0.85}Ni_{0.23}Mn_{0.42}Fe_{0.28}Zn_{0.04}Sn_{0.02}O_2$, $Na_{0.85}Ni_{0.23}Mn_{0.42}Fe_{0.28}Zn_{0.04}Sb_{0.02}O_2$, $Na_{0.85}Ni_{0.23}Mn_{0.42}Fe_{0.28}Zn_{0.04}Zr_{0.02}O_2$, $Na_{0.85}Ni_{0.23}Mn_{0.42}Fe_{0.28}Zn_{0.04}Nb_{0.02}O_2$, $Na_{0.85}Ni_{0.23}Mn_{0.42}Fe_{0.28}Zn_{0.04}Ti_{0.02}O_2$, $Na_{0.85}Ni_{0.23}Mn_{0.42}Fe_{0.28}Zn_{0.04}Mg_{0.02}O_2$, $Na_{0.85}Ni_{0.23}Mn_{0.42}Fe_{0.28}Zn_{0.04}Ru_{0.02}O_2$, $Na_{0.85}Ni_{0.23}Mn_{0.42}Fe_{0.28}Zn_{0.04}Ir_{0.02}O_2$, and $Na_{0.85}Ni_{0.23}Mn_{0.42}Fe_{0.28}Zn_{0.04}Ir_{0.02}O_{1.8}$. The content of the Zn element in each of the layered oxides represented by these chemical formulas is low, and the Zn element with the low content interacts with metal elements with other contents. This can significantly improve the doping of the transition metal layer contained in the layered oxide represented by the chemical formula (I), allowing for formation of a specific arrangement between the metal elements in the transition metal layer contained in the layered oxide, thereby further improving the structural stability of the layered oxide during intercalation and deintercalation of sodium, and improving the gram capacity of the layered oxide and the cycling stability of the reversible capacity. In addition, controlling the doping content of the Zn element with the Fe element or further with the doping metal element represented by M can also reduce the content of the Ni element, thereby reducing the economic cost of the layered oxide while increasing the gram capacity of the layered oxide represented by the chemical formula (I). In addition, the electrochemical performance and processing performance of the layered oxide can also be further improved.

Upon testing, in some embodiments, a crystal structure of the layered oxide represented by the chemical formula (I) according to the above embodiments includes an O3-phase layered metal oxide. The O3-phase layered metal oxide refers to a layered oxide with a crystal structure in which oxygen atoms are stacked in an ABCABC manner. In an embodiment, the layered oxide represented by the chemical formula (I) according to the above embodiments is mainly the O3-phase layered metal oxide, where being mainly the O3-phase layered metal oxide means that in the layered oxide represented by the chemical formula (I), a weight percentage of the O3-phase layered metal oxide, that is, the O3-phase layered metal oxide accounts for 95% or more of a total weight of the layered oxide represented by the chemical formula (I), further 98% or more. Certainly, the weight percentage of the O3-phase layered metal oxide in the layered oxide represented by the chemical formula (I) may reach 100%. A higher weight percentage of the O3-phase layered metal oxide in the layered oxide represented by the chemical formula (I) is more desirable. The layered oxide represented by the chemical formula (I) exists mainly as an O3-phase layered metal oxide or as a pure O3-phase layered metal oxide, allowing the layered oxide to have relatively high structural stability, for example, allowing the layered oxide to have relatively high structural stability compared with a P2 phase layered metal oxide, and allowing for a higher gram capacity and better cycling stability of the reversible capacity.

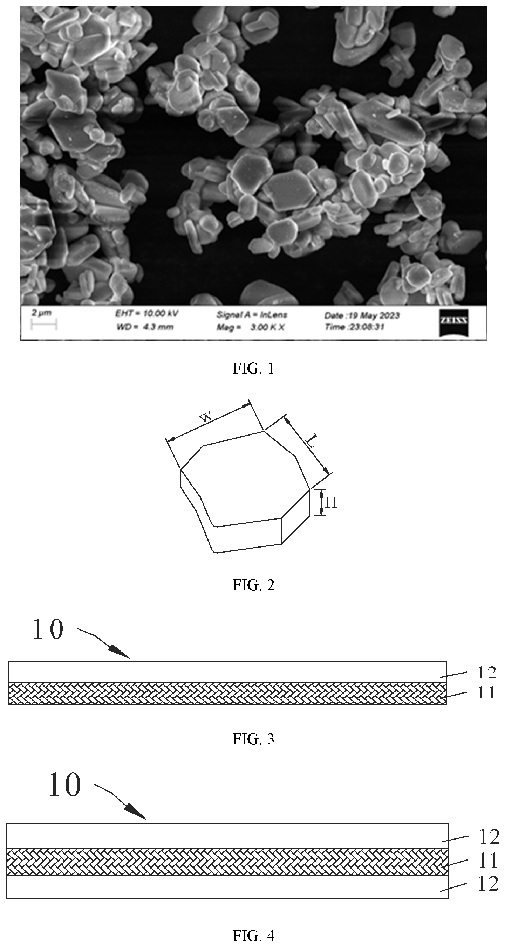

In some embodiments, upon electron microscope analysis, a crystal of the layered oxide represented by the chemical formula (I) according to the above embodiments includes a single crystal, and the single crystal is flat, as shown in FIG. 1. Since the layered oxide is mainly the O3-phase layered metal oxide, the O3-phase layered metal oxide is a single crystal.

Further electron microscope analysis of the single crystal shows that in some embodiments, as shown in FIG. 2, a ratio of a length L, a width W, and a thickness H of the single crystal of the layered oxide represented by the chemical formula (I) is (1 to 8):(1 to 5):(0.5 to 2.5), optionally (2 to 6):(2 to 4):(1 to 2). In an exemplary embodiment, the ratio may be selected from typical but non-limiting ratios such as 1:1:0.5, 3:2:0.5, 5:3:1, 7:4:2, 8:5:2.5, 8:2:1, or a range defined by any two of these ratio values. The length L and the width W are respectively denoted as L and W in FIG. 2, which are the length L and width W of the large surface of the flat single crystal. The thickness is denoted as H in FIG. 2, which is the thickness of the flat single crystal.

Based on the above ratio of the length L, the width W, and the thickness H, in an embodiment, the length L of the single crystal may be 1 $\mu$m to 8 $\mu$m, optionally 2 $\mu$m to 6 $\mu$m. In an exemplary embodiment, the length L of the single crystal may be selected from typical but non-limiting lengths such as 1 $\mu$m, 2 $\mu$m, 3 $\mu$m, 4 $\mu$m, 5 $\mu$m, 6 $\mu$m, 7 $\mu$m, 8 $\mu$m, or a range defined by any two of these length values.

In an embodiment, the width W of the single crystal may be 1 $\mu$m to 5 $\mu$m, optionally 2 $\mu$m to 4 $\mu$m. In an exemplary embodiment, the width W of the single crystal may be selected from typical but non-limiting widths such as 1 $\mu$m, 2 $\mu$m, 3 $\mu$m, 4 $\mu$m, 5 $\mu$m, or a range defined by any two of these width values.

In an embodiment, the thickness H of the single crystal may be 0.5 $\mu$m to 2.5 $\mu$m, optionally 1 $\mu$m to 2 $\mu$m. In an exemplary embodiment, the thickness H of the single crystal may be selected from typical but non-limiting thicknesses such as 0.5 $\mu$m, 1 $\mu$m, 1.5 $\mu$m, 2 $\mu$m, 2.5 $\mu$m, or a range defined by any two of these thickness values.

In an embodiment, upon testing, a particle size $D_v50$ of the layered oxide represented by the chemical formula (I) according to the above embodiments is 3 $\mu$m to 11 $\mu$m, optionally 4 $\mu$m to 8 $\mu$m. In an exemplary embodiment, the particle size $D_v50$ may be selected from typical but non-limiting particle sizes such as 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, or a range defined by any two of these particle size values. The particle size $D_v50$ refers to a particle size of powder of the layered oxide represented by the chemical formula (I).

The particle size $D_v50$ of the layered oxide represented by the chemical formula (I) according to the above embodiments and a single crystal size distribution range of the O3-phase layered metal oxide contained in the layered oxide allow the layered oxide to have a high compacted density, thereby increasing the compacted density of the positive electrode material according to this embodiment of this application and the energy density of the battery. In addition, the layered oxide has an appropriate specific surface area.

Upon testing, in an embodiment, the specific surface area (BET) of the layered oxide represented by the chemical formula (I) according to the above embodiments is 0.5 $m^2/g$ to 1.3 $m^2/g$, optionally 0.6 $m^2/g$ to 0.9 $m^2/g$. In an exemplary embodiment, the specific surface area may be selected from typical but non-limiting specific surface areas such as 0.5 $m^2/g$, 0.6 $m^2/g$, 0.7 $m^2/g$, 0.8 $m^2/g$, 0.9 $m^2/g$, 1 $m^2/g$, 1.1 $m^2/g$, 1.2 $m^2/g$, 1.3 $m^2/g$, or a range defined by any two of these specific surface area values. The specific surface area in this range can improve the performance such as the stability of the contact interface between the layered oxide and the electrolyte, thereby improving the electrochemical performances such as the cycling performance.

Upon testing, in an embodiment, a compacted density of the layered oxide represented by the chemical formula (I) according to the above embodiments under a pressure of 2 tons is 2.8 $g/cm^3$ to 3.1 $g/cm^3$, optionally 2.9 $g/cm^3$ to 3.09 $g/cm^3$. In an exemplary embodiment, the compacted density under a pressure of 2 tons may be selected from typical but non-limiting compacted densities such as 2.8 $g/cm^3$, 2.9 $g/cm^3$, 3 $g/cm^3$, 3.09 $g/cm^3$, 3.1 $g/cm^3$, or a range defined by any two of these compacted density values.

In an embodiment, a compacted density of the layered oxide represented by the chemical formula (I) according to the above embodiments under a pressure of 3 tons is 3.1 $g/cm^3$ to 3.3 $g/cm^3$, optionally 3.15 $g/cm^3$ to 3.28 $g/cm^3$. In an exemplary embodiment, the compacted density under a pressure of 3 tons may be selected from typical but non-limiting compacted densities such as 3.1 $g/cm^3$, 3.15 $g/cm^3$, 3.2 $g/cm^3$, 3.25 $g/cm^3$, 3.28 $g/cm^3$, 3.3 $g/cm^3$, or a range defined by any two of these compacted density values.

The above compacted density ranges can improve the energy density and corresponding electrochemical performance of the battery containing the layered oxide represented by the chemical formula (I).

Based on the morphology, crystal type, particle size, compacted density, and other performances of the layered oxide represented by the chemical formula (I) according to the above embodiments, in an embodiment, upon testing, a charge gram capacity of the layered oxide at 1.5 V to 4.2 V and 0.1C is 164 mAh/g to 174 mAh/g, optionally 165 mAh/g to 172 mAh/g. A discharge gram capacity is 158 mAh/g to 165 mAh/g, optionally 160 mAh/g to 163 mAh/g. In some other embodiments, the initial efficiency of the layered oxide at 1.5 V to 4.2 V and 0.1C is 92% to 98%, optionally 92% to 95%.

The charge gram capacity, discharge gram capacity, and initial efficiency of the layered oxide refer to the gram capacity and initial efficiency of the layered oxide. Specifically, the layered oxide is prepared into a positive electrode of a sodium-ion button battery, then the positive electrode is assembled with a negative electrode into a sodium-ion button battery. The gram capacity and initial efficiency are obtained by testing the sodium-ion button battery. From the ranges of the gram capacity and initial efficiency of the layered oxide, it can be seen that the structural stability of the layered oxide crystal is significantly improved, the structural stability during intercalation and deintercalation of sodium is improved, and the layered oxide crystal has a high gram capacity and good cycling stability of a reversible capacity.

In an embodiment, the above sodium-ion button battery used for testing the charge gram capacity, discharge gram capacity, and initial efficiency of the layered oxide is assembled in the following method.

Positive electrode plate: The layered oxide represented by the above chemical formula (I) is used as a positive electrode active material and fully stirred and mixed with a conductive agent carbon nanotubes, a conductive agent carbon black, a binder polyvinylidene fluoride (PVDF) at a weight ratio of 95:0.5:2:2.5 in an appropriate amount of solvent NMP to form a uniform positive electrode slurry; and the positive electrode slurry is uniformly applied on a surface of a positive electrode current collector aluminum foil with a thickness of 13 $\mu$m, followed by drying and cold pressing, to obtain a positive electrode plate.

Negative electrode plate: Hard carbon, a conductive agent SP, a CMC binder are added to deionized water at a weight ratio of 8:1:1 and fully stirred and mixed to form a uniform negative electrode slurry; and the negative electrode slurry is uniformly applied on a surface of a copper foil with a thickness of 6 $\mu$m, followed by drying and cold pressing, to obtain a negative electrode plate.

Electrolyte: 1M $NaPF_6$/(EC/DEC, at a volume ratio of 1:1).
Separator: Glass fiber.

Assembly of sodium-ion button battery: The above positive electrode plate, glass fiber film, and negative electrode plate are stacked in sequence and assembled to form a button battery assembly; the electrode assembly is placed into a packaging shell; and the 1M $NaPF_6$/(EC/DEC, at a volume ratio of 1:1) electrolyte is added, followed by processes such as packaging, formation, and standing, to obtain a sodium-ion battery.

Based on the above embodiments, the positive electrode material according to the embodiments of this application may contain only the layered oxide represented by the chemical formula (I) according to the above embodiments. Certainly, the positive electrode material may further include other positive electrode materials such as one or more of a polyanion compound, a Prussian blue compound, and other layered oxides.

In an exemplary embodiment, the polyanion compound may include at least one of sodium vanadyl phosphate, sodium iron pyrophosphate, sodium iron phosphate, sodium iron fluorophosphate, and the like.

In an exemplary embodiment, the Prussian blue compound may include at least one of $Na_2Fe[Fe(CN)_6]$ (FeHCF), $Na_2Mn[Fe(CN)_6]$ (MnHCF), and the like.

The above other positive electrode materials can, together with the above layered oxide represented by the chemical formula (I), further improve the electrochemical performance such as the energy density, the reversible capacity, and the cycling performance of the battery containing the positive electrode material according to the embodiments of this application.

Preparation method of positive electrode material

According to a second aspect, an embodiment of this application provides a preparation method of the positive electrode material according to the above embodiments of this application. In some embodiments, the preparation method of the positive electrode material in this embodiment of this application includes the following steps.

S10: Provide a precursor of $Na_qNi_xMn_yFe_zZn_pM_iO_j$.

S20: Perform sintering treatment on the precursor to obtain a layered oxide with a chemical formula $Na_qNi_xMn_yFe_zZn_pM_iO_j$.

In step S10 of the preparation method of the positive electrode material according to this embodiment of this application, the precursor of $Na_qNi_xMn_yFe_zZn_pM_iO_j$ is the precursor of the layered oxide represented by the chemical formula (I) contained in the positive electrode material according to the above embodiments of this application. Therefore, q, x, y, z, p, i, and j contained in $Na_qNi_xMn_yFe_zZn_pM_iO_j$ in step S10 are respectively in the following ranges:
$0.8 \leq q \leq 1$; $0.1 \leq x \leq 0.3$, optionally $0.15 \leq x \leq 0.25$; $0.2 \leq y \leq 0.5$, optionally $0.25 \leq y \leq 0.45$; $0.2 \leq z \leq 0.35$, optionally $0.25 \leq z \leq 0.32$; $0.02 \leq p \leq 0.075$, optionally $0.04 \leq p \leq 0.07$ or $0.04 \leq p \leq 0.065$; $0 \leq i \leq 0.1$, optionally $0 \leq i \leq 0.05$; $1.8 \leq j \leq 2$; and $x+y+z+p+i \leq 1$. M is an active and/or inert doping metal element. In an exemplary embodiment, the doping metal element includes at least one of V, Ca, Cr, Al, Sc, Sn, Sb, Zr, Nb, Ti, Mg, Cu, Ru, and Ir. The sintering treatment in step S20 is to make the precursor of $Na_qNi_xMn_yFe_zZn_pM_iO_j$ in step S10 react to generate the layered oxide represented by the chemical formula (I) contained in the positive electrode material according to the above embodiments of this application.

In the preparation method of the positive electrode material according to this embodiment of this application, a low-zinc layered oxide with the chemical formula $Na_qNi_xMn_yFe_zZn_pM_iO_j$ contained in the positive electrode material according to the above embodiments of this application is generated by sintering the precursor of $Na_qNi_xMn_yFe_zZn_pM_iO_j$. Therefore, the content of the zinc element in the layered oxide prepared by the preparation method of the positive electrode material according to this embodiment of this application is low, and the structural stability during intercalation and deintercalation of sodium is high, so that the prepared layered oxide has a high gram capacity and cycling stability of a reversible capacity, and also has the performance such as high air stability and diffusion rate. In addition, the conditions for performing the sintering treatment on the precursor of $Na_qNi_xMn_yFe_zZn_pM_iO_j$ can be effectively controlled, thereby improving the structural stability and electrochemical performance of the layered oxide with the chemical formula $Na_qNi_xMn_yFe_zZn_pM_iO_j$.

Step S10:

The precursor of $Na_qNi_xMn_yFe_zZn_pM_iO_j$ in step S10 can be prepared by a sodium source, a nickel source, a manganese source, an iron source, a zinc source, and a doping element source represented by M through a solid-phase method or a precipitation method according to an elemental stoichiometric ratio such as molar or a mass ratio converted from molar in $Na_qNi_xMn_yFe_zZn_pM_iO_j$.

When the solid-phase method is used to prepare the precursor of $Na_qNi_xMn_yFe_zZn_pM_iO_j$, in an embodiment, the precursor of $Na_qNi_xMn_yFe_zZn_pM_iO_j$ can be prepared in a method including the following step.

Step S11: Perform solid-phase mixing treatment on the sodium source, the nickel source, the manganese source, the iron source, the zinc source, and the doping element source represented by M according to the elemental stoichiometric ratio in $Na_qNi_xMn_yFe_zZn_pM_iO_j$ to obtain the precursor of $Na_qNi_xMn_yFe_zZn_pM_iO_j$.

In step S11, the solid-phase mixing treatment is relative to liquid-phase mixing and generally means that no solvent is added during the mixing treatment process; for example, no water is added. To be specific, dry mixing treatment is performed on the sodium source, the nickel source, the manganese source, the iron source, the zinc source, or further a solid doping element source represented by M under solvent-free conditions.

To improve the uniform mixing of the sodium source, the nickel source, the manganese source, the iron source, the zinc source, or further the doping element source represented by M during the solid-phase mixing treatment, in an embodiment, the nickel source, the manganese source, the iron source, the zinc source, or further the doping element source represented by M can be mixed first, and then the sodium source is added for further mixing treatment, thereby improving the mixing uniformity of the sources and improving the safety of the solid-phase mixing treatment.

In an embodiment, the mixing treatment may include but is not limited to ball milling treatment, as long as the mixing uniformity of the sodium source, the nickel source, the manganese source, the iron source, the zinc source, or further the doping element source represented by M falls within the scope disclosed in this embodiment of this application. In an embodiment, when the mixing treatment is ball milling treatment, a rotation speed of the ball milling treatment can be controlled to 300 rpm to 1000 rpm, optionally 400 rpm to 600 rpm; and the ball milling treatment time may be 1 h to 6 h, optionally 2 h to 4 h. Through the ball milling treatment, the mixing uniformity of the sources can be improved, thereby ultimately improving the stability of the structure and performance such as the electrochemical performance of the $Na_qNi_xMn_yFe_zZn_pM_iO_j$ layered oxide in step S20.

In an exemplary embodiment, the sodium source may be a sodium salt. For example, the sodium salt may include at least one of sodium carbonate, sodium hydroxide, and the like.

In an exemplary embodiment, the nickel source may be a soluble or insoluble nickel compound. For example, the nickel source may be nickel oxide (NiO), a nickel salt, or the like. The nickel salt may include at least one of nickel nitrate, nickel carbonate, nickel hydroxide, nickel sulfate, and the like.

In an exemplary embodiment, the manganese source may be a soluble or insoluble manganese compound. For example, the manganese source may be manganese oxide ($Mn_2O_3$), a manganese salt, or the like. The manganese salt may include at least one of manganese nitrate, manganese carbonate, manganese hydroxide, manganese sulfate, and the like.

In an exemplary embodiment, the iron source may be a soluble or insoluble iron compound. For example, the iron source may be iron oxide (such as $Fe_2O_3$), an iron salt, or the like. The iron salt may include at least one of iron nitrate, iron carbonate, iron hydroxide, iron sulfate, and the like.

In an exemplary embodiment, the zinc source may be a soluble or insoluble zinc compound. For example, the zinc source may be zinc oxide (such as ZnO), a zinc salt, or the like. The zinc salt may include at least one of zinc nitrate, zinc carbonate, zinc hydroxide, zinc sulfate, and the like.

In an exemplary embodiment, the doping metal element source represented by M may be a soluble or insoluble compound of the doping metal element represented by M. For example, the doping metal element source represented by M may be an oxide of the doping metal element represented by M, a salt of the doping metal element represented by M, or the like. The salt of the doping metal element represented by M may include at least one of nitrate, carbonate, hydroxide, sulfate, and the like of the doping metal element represented by M.

The above types of sodium sources, nickel sources, manganese sources, iron sources, zinc sources, or further doping element sources represented by M can be effectively mixed fully during the mixing treatment process, thereby improving the structure and chemical stability of the $Na_qNi_xMn_yFe_zZn_pM_iO_j$ layered oxide generated by the precursor of $Na_qNi_xMn_yFe_zZn_pM_iO_j$.

When the precipitation method is used to prepare the precursor of $Na_qNi_xMn_yFe_zZn_pM_iO_j$, in an embodiment, the precursor of $Na_qNi_xMn_yFe_zZn_pM_iO_j$ can be prepared in a method including the following steps.

Step S12: Prepare a mixed solution from a soluble nickel source, a soluble manganese source, a soluble iron source, a soluble zinc source, or further a soluble doping element source represented by M according to the elemental stoichiometric ratio in $Na_qNi_xMn_yFe_zZn_pM_iO_j$, and then add at least one of a precipitant and a complexing agent for co-precipitation treatment to obtain a precipitate mixture.

Step S13: Mix the precipitate mixture with a sodium source to obtain the precursor of $Na_qNi_xMn_yFe_zZn_pM_iO_j$.

In step S12, at least one of the precipitant and the complexing agent should be a compound that can precipitate nickel, manganese, iron, zinc, and the doping metal element represented by M in the nickel source, the soluble manganese source, the soluble iron source, the soluble zinc source, and the soluble doping element source represented by M. For example, in an embodiment, the precipitant may include at least one of alkali metal hydroxide, carbonate, and the like.

In an embodiment, the complexing agent may include an inorganic or organic complexing agent. In an exemplary embodiment, the inorganic complexing agent may include at least one of ammonia water, ammonium bicarbonate, ammonium sulfate, ammonium carbonate, and the like. The organic complexing agent may include at least one of citric acid, tartaric acid, disodium ethylenediaminetetraacetate, ethylenediaminetetraacetic acid (EDTA), nitrilotriacetic acid (NTA), and the like.

These types of precipitants and complexing agents can effectively precipitate nickel, manganese, iron, zinc, and the doping element represented by M.

In an embodiment, at least one of the precipitant and the complexing agent should be excessive relative to a total amount of metal elements contained in the mixed solution, such as a total molar amount, ensuring that all metal elements contained in the mixed solution are fully precipitated, thereby improving the accuracy of the stoichiometric ratios of metal elements contained in the precursor of $Na_qNi_xMn_yFe_zZn_pM_iO_j$.

In an exemplary embodiment, the soluble nickel source may include at least one of nickel acetate, nickel chloride, nickel nitrate, and nickel sulfate, and the like.

In an exemplary embodiment, the soluble manganese source may include at least one of nitrate, manganese sulfate, halide, and the like of manganese.

In an exemplary embodiment, the soluble iron source may include at least one of nitrate, manganese sulfate, halide, and the like of iron.

In an exemplary embodiment, the soluble zinc source may include at least one of nitrate, manganese sulfate, halide, and the like of zinc.

In an exemplary embodiment, the soluble doping metal element source represented by M may include at least one of nitrate, manganese sulfate, halide, and the like of the doping metal element represented by M.

The above types of soluble nickel sources, soluble manganese sources, soluble iron sources, soluble zinc sources, and soluble doping element sources represented by M all have good solubility, and can quantitatively control the stoichiometric ratios of metal elements in the precipitate mixture.

A mixing ratio between the sodium source and the precipitate mixture in step S13 should satisfy the stoichiometric ratio of the sodium element in $Na_qNi_xMn_yFe_zZn_pM_iO_j$. The mixing treatment may be solid-phase mixing treatment or may include dissolving the soluble sodium source, then mixing the soluble sodium source with the precipitate mixture, and then removing the solvent.

In an exemplary embodiment, the sodium source may be a sodium salt. For example, the sodium salt may include at least one of sodium carbonate, sodium hydroxide, and the like.

In addition, there is no sequential relationship between the above steps S11, S12, and S13.

Step S20:

After the precursor of $Na_qNi_xMn_yFe_zZn_pM_iO_j$ in step S10 is sintered in step S20, a layered oxide with the chemical formula $Na_qNi_xMn_yFe_zZn_pM_iO_j$ can be generated. It has been found in the research that the sintering treatment conditions have certain influence on the structural stability and electrochemical performance of the generated $Na_qNi_xMn_yFe_zZn_pM_iO_j$ layered oxide. In some embodiments, the sintering treatment temperature can be controlled at 700°C to 980°C, optionally 750°C to 950°C. In an exemplary embodiment, the sintering treatment temperature may be selected from typical but non-limiting temperatures such as 700°C, 750°C, 800°C, 850°C, 900°C, 950°C, 980°C, or a range defined by any two of these temperature values.

Under the above sintering treatment temperature, the sintering treatment time may be 4 h to 20 h, optionally 6 h to 12 h. In an exemplary embodiment, the sintering treatment time may be selected from typical but non-limiting hours such as 4 h, 5 h, 8 h, 10 h, 12 h, 15 h, 18 h, 20 h, or a range defined by any two of these hours.

By controlling the stability and time of the sintering treatment in the above ranges, the precursor of $Na_qNi_xMn_yFe_zZn_pM_iO_j$ in step S10 can react to generate the $Na_qNi_xMn_yFe_zZn_pM_iO_j$ layered oxide, and the structural stability of the $Na_qNi_xMn_yFe_zZn_pM_iO_j$ layered oxide during intercalation and deintercalation of sodium can be further improved, further improving the high gram capacity of the layered oxide and the cycling stability of its reversible capacity. In addition, the content of an O3-phase layered metal oxide and the content of a single crystal in the $Na_qNi_xMn_yFe_zZn_pM_iO_j$ layered oxide can also be increased, and a size of the single crystal and a particle size of the layered oxide can be controlled, thereby increasing a compacted density of the layered oxide.

In an embodiment, the sintering treatment temperature may be a temperature increased to the sintering treatment temperature at a heating rate of 2°C/min to 15°C/min. The heating rate may be further controlled at 4°C/min to 10°C/min. In an exemplary embodiment, the heating rate may be selected from typical but non-limiting rates such as 2°C/min, 4°C/min, 6°C/min, 8°C/min, 10°C/min, 12°C/min, 15°C/min, 17°C/min, 18°C/min, 20°C/min, or a range defined by any two of these rate values. By controlling the heating rate of the sintering treatment, for example, controlling the heating rate of the sintering treatment in this heating rate range, the crystal integrity of the $Na_qNi_xMn_yFe_zZn_pM_iO_j$ layered oxide can be improved, for example, improving the uniformity of crystal morphology.

In addition, the sintering treatment in the above step S20 should be understood to be performed in an oxygen-containing environment. For example, in an embodiment, the sintering treatment may be performed in air or an oxygen-containing protective atmosphere. For example, the sintering treatment may be performed in oxygen-containing nitrogen or inert gas.

Positive electrode

According to a third aspect, an embodiment of this application provides a positive electrode. In some embodiments, the positive electrode according to this embodiment of this application includes a current collector and a positive electrode active material layer. The positive electrode active material layer is stacked with the current collector, and the positive electrode active material layer contains the positive electrode material according to the above embodiments of this application.

In the positive electrode according to this embodiment of this application, the current collector refers to a structure for collecting current and transmitting electrons. The positive electrode active material layer refers to a layer structure containing a positive electrode active material. The positive electrode active material is a key material participating in the chemical reaction of a battery in the positive electrode. The positive electrode active material includes the positive electrode material according to the above embodiments of this application. The positive electrode active material layer being stacked with the current collector means that the positive electrode active material layer is at least stacked on a surface of the current collector. In addition, the positive electrode may be an electrode plate. The electrode plate refers to the positive electrode having a sheet-like morphology. Certainly, the positive electrode can also be set to other morphologies as needed.

Since the positive electrode active material layer of the positive electrode according to this embodiment of this application contains the positive electrode material according to the above embodiments of this application, the positive electrode has a relatively high gram capacity and good cycling performance.

In an embodiment, the current collector contained in the positive electrode according to this embodiment of this application includes but is not limited to a metal current collector, a carbon current collector, a conductive resin current collector, a composite current collector of metal and resin, and the like, more specifically such as aluminum, copper, nickel, titanium, iron, and their respective alloys, stainless steel, carbon fiber, carbon nanotubes (CNT), and graphite. In an embodiment, the current collector may alternatively be a dense film layer or a film layer with a porous structure. In an embodiment, the current collector may be but is not limited to an aluminum foil, a porous aluminum foil, or the like.

In an embodiment, the positive electrode active material layer contained in the positive electrode according to this embodiment of this application being provided on the surface of the current collector may mean that the positive electrode active material layer is at least stacked on the surface of the current collector. When a surface layer of the current collector contains a porous structure or the current collector is a porous structure, the positive electrode active material layer may be at least partially embedded in the current collector.

In some embodiments, the positive electrode active material layer at least provided on the surface of the current collector may be a structure as shown in FIG. 3, where the positive electrode active material layer 12 is stacked on one surface of the current collector 11. When the surface of the current collector 11 has a porous structure or the entire current collector 11 is a porous structure, the positive electrode active material layer 12 can further extend into the porous structure of the current collector 11 in addition to being provided on the surface of the current collector 11.

In some other embodiments, the positive electrode active material layer at least provided on the surface of the current collector may be a structure as shown in FIG. 4, where the current collector 11 has two opposite surfaces, and the positive electrode active material layer 12 is stacked on the two opposite surfaces of the current collector 11. When at least one of the two surfaces of the current collector 11 has a porous structure or the entire current collector 11 is a porous structure, the positive electrode active material layer 12 can further extend into the porous structure of the current collector 11 in addition to being provided on the two surfaces of the current collector 11.

As an embodiment of this application, in the above positive electrode active material layer, a mass percentage of the layered oxide represented by the chemical formula (I) contained in the positive electrode material according to the above embodiments of this application in the positive electrode active material layer may be 90% to 98%, optionally 92% to 96%. In an exemplary embodiment, the mass percentage may be selected from typical but non-limiting contents such as 90%, 91%, 92%, 93%, 94%, 95%, 96%, 97%, 98%, or a range defined by any two of these content values. The layered oxide in this percentage range can effectively increase the gram capacity of the positive electrode, thereby increasing the energy density of the battery. In addition, the layered oxide has good cycling performance. Since the layered oxide also has good processing performance, the film quality of the positive electrode active material layer is also effectively improved.

The positive electrode active material layer contained in the positive electrode of the above embodiments of this application generally includes a binder, a conductive agent, and other components in addition to the above positive electrode active material component. The binder can enhance the mechanical performance between the positive electrode active material layer and the current collector. The conductive agent can effectively improve the conductivity of the positive electrode, such as reducing the resistance of the positive electrode.

In an embodiment, a mass percentage of the binder contained in the above positive electrode active material layer may be 0.5% to 5%, optionally 1% to 3%. In an exemplary embodiment, the mass percentage of the binder may be selected from typical but non-limiting percentages such as 0.5%, 0.8%, 1%, 1.3%, 1.5%, 1.8%, 2%, 2.3%, 2.5%, 2.8%, 3%, or a range defined by any two of these content values.

In an embodiment, the binder may include one or more of an oil-soluble binder, a water-soluble binder, an emulsion-type binder, and the like. In an exemplary embodiment, the oil-soluble binder may include one or more of polyvinylidene fluoride, polyimide, polytetrafluoroethylene, polybutyl acrylate, polyacrylonitrile, and the like. In an exemplary embodiment, the water-soluble binder may include one or more of carboxymethyl cellulose, carboxymethyl cellulose salt, polyacrylic acid, polyacrylate, polyvinyl alcohol, sodium alginate, cyclodextrin, and the like. In an exemplary embodiment, the emulsion-type binder includes one or more of styrene-butadiene rubber, vinyl acetate resin, acrylic resin, and chlorinated rubber.

The above types of binders in the percentage range can effectively enhance the mechanical performance of the positive electrode active material layer and the bonding strength between the positive electrode active material layer and the current collector, and can effectively improve the cycling performance of the positive electrode.

In an embodiment, a mass percentage of the conductive agent contained in the above positive electrode active material layer may be 0.5% to 5%, optionally 1% to 3%. In an exemplary embodiment, the mass percentage of the conductive agent may be selected from typical but non-limiting percentages such as 0.5%, 0.8%, 1%, 1.3%, 1.5%, 1.8%, 2%, 2.3%, 2.5%, 2.8%, 3%, or a range defined by any two of these percentage values.

In an embodiment, the conductive agent may include at least one of a particulate conductive agent, a linear conductive agent, and the like. The particulate conductive agent may include one or more of acetylene black (SP), conductive carbon black (super-P), Ketjen black, graphene, and the like. The linear conductive agent may include one or more of carbon nanotubes, carbon fiber, conductive oxide nanowires, and the like. The particulate conductive agent is relative to the linear conductive agent and is a non-linear conductive agent with a particulate morphology. The linear conductive agent refers to a conductive agent with a one-dimensional fiber morphology.

The above types of conductive agents in the percentage range can effectively improve the conductivity of the positive electrode active material layer.

In an embodiment, the conductive agent contained in the positive electrode active material layer in the positive electrode according to the above embodiments includes a linear conductive agent and a particulate conductive agent. A mass percentage of the linear conductive agent in the positive electrode active material layer is 0.1% to 2.5%, optionally 0.2% to 0.8%. In an exemplary embodiment, the mass percentage of the linear conductive agent may be selected from typical but non-limiting percentages such as 0.1%, 0.2%, 0.3%, 0.4%, 0.5%, 0.6%, 0.7%, 0.8%, 1%, 1.3%, 1.5%, 1.8%, 2%, 2.3%, 2.5%, or a range defined by any two of these content values. Since the crystal of the layered oxide represented by the chemical formula (I) contained in the positive electrode material according to the above embodiments of this application includes a single crystal, and the single crystal is flat in morphology, adding the linear conductive agent to the positive electrode active material layer and controlling the percentage of the linear conductive agent in this range allow the linear conductive agent to form a rich conductive network structure in the positive electrode active material layer. In addition, the linear conductive agent can also wrap around the surface of the flat single crystal particles. The particulate conductive agent can be effectively dispersed in gaps of the positive electrode material. In this way, the linear conductive agent constructs a long-range conductive network structure in the positive electrode active material layer, and the particulate conductive agent constitutes a short-range conductive structure. Therefore, the conductive synergistic effect of the linear conductive agent and the particulate conductive agent in the positive electrode active material layer effectively improves the conductivity of the positive electrode active material layer, and can significantly reduce the internal resistance of the positive electrode.

In an embodiment, an aspect ratio of the above linear conductive agent may be selected and controlled to be (40 to 3000):1, optionally (50 to 2500):1. In an exemplary embodiment, the aspect ratio of the above linear conductive agent may be selected from typical but non-limiting aspect ratios such as 40:1, 50:1, 100:1, 500:1, 1000:1, 1500:1, 2000:1, 2500:1, 3000:1, or a range defined by any two of these aspect ratio values. The aspect ratio refers to a ratio of a length to a diameter of the above linear conductive agent.

In a further embodiment, the length of the above linear conductive agent may be selected and controlled to be 0.5 $\mu$m to 5 $\mu$m, optionally 0.5 $\mu$m to 2 $\mu$m. In an exemplary embodiment, the length of the above linear conductive agent may be selected from typical but non-limiting lengths such as 0.5 $\mu$m, 1 $\mu$m, 1.5 $\mu$m, 2 $\mu$m, 3 $\mu$m, 3.5 $\mu$m, 4 $\mu$m, 4.5 $\mu$m, 5 $\mu$m, or a range defined by any two of these length values.

In a further embodiment, the diameter of the above linear conductive agent may be selected and controlled to be 2 nm to 10 nm, optionally 3 nm to 7 nm. In an exemplary embodiment, the diameter of the above linear conductive agent may be selected from typical but non-limiting diameters such as 2 nm, 3 nm, 4 nm, 5 nm, 6 nm, 7 nm, 8 nm, 9 nm, 10 nm, or a range defined by any two of these diameter values.

The aspect ratio of the above linear conductive agent is selected and controlled in the above range, or the length and diameter of the above linear conductive agent are further selected and controlled in the above range, so that the linear conductive agent can construct a richer long-range conductive network structure in the positive electrode active material layer, further enhancing the conductive synergistic effect of the linear conductive agent and the particulate conductive agent, thereby further improving the conductivity of the positive electrode active material layer.

In an embodiment, the positive electrode active material layer in the positive electrode according to the above embodiments may further include another additive in addition to the components such as the positive electrode active material, the binder, and the conductive agent. In an embodiment, the additive may include but is not limited to functional components such as a sodium compensation additive.

In some embodiments, a content of the positive electrode active material layer on one surface of the current collector according to the above embodiments, that is, a coating weight (CW), is 260 mg/1540.25mm$^2$ to 350 mg/1540.25mm$^2$, optionally 280 mg/1540.25mm$^2$ to 320 mg/1540.25mm$^2$. In an exemplary embodiment, the content of the positive electrode active material layer may be selected from typical but non-limiting contents such as 260 mg/1540.25mm$^2$, 270 mg/1540.25mm$^2$, 280 mg/1540.25mm$^2$, 290 mg/1540.25mm$^2$, 300 mg/1540.25mm$^2$, 310 mg/1540.25mm$^2$, 320 mg/1540.25mm$^2$, 330 mg/1540.25mm$^2$, 340 mg/1540.25mm$^2$, 350 mg/1540.25mm$^2$, or a range defined by any two of these content values. The coating weight refers to a weight of the positive electrode active material layer per unit area. The coating weight in this range can effectively increase the gram capacity of the positive electrode, thereby increasing the energy density of the battery.

In some embodiments, a compacted density of the positive electrode active material layer according to the above embodiments may be 2.8 g/cm$^3$ to 3.4 g/cm$^3$, optionally 2.9 g/cm$^3$ to 3.2 g/cm$^3$. In an exemplary embodiment, the compacted density of the positive electrode active material layer may be selected from typical but non-limiting compacted densities such as 2.8 g/cm$^3$, 2.9 g/cm$^3$, 3.0 g/cm$^3$, 3.1 g/cm$^3$, 3.2 g/cm$^3$, 3.3 g/cm$^3$, 3.4 g/cm$^3$, or a range defined by any two of these compacted density values. The compacted density refers to a weight of the positive electrode active material layer per unit volume. The compacted density in this range can effectively increase the gram capacity of the positive electrode, thereby increasing the energy density of the battery, and allowing for good stability of a contact interface with the electrolyte.

In some embodiments, a porosity of the positive electrode active material layer according to the above embodiments may be 40% to 65%, optionally 45% to 60%. In an exemplary embodiment, the porosity of the positive electrode active material layer may be selected from typical but non-limiting porosities such as 40%, 43%, 45%, 48%, 50%, 53%, 55%, 58%, 60%, 63%, 65%, or a range defined by any two of these porosity values. The porosity refers to a percentage of a total volume of pores contained in the positive electrode active material layer per unit volume to the unit volume of the positive electrode active material layer. The porosity in this range can make the positive electrode active material layer have the above compacted density, and increase the gram capacity of the positive electrode, thereby increasing the energy density of the battery, and improving the infiltration of the electrolyte.

In some embodiments, the positive electrode according to the above embodiments is an electrode plate, and a sheet resistance of the positive electrode active material layer according to the above embodiments may be 0.5 m$\Omega$ to 5 m$\Omega$, optionally 0.5 m$\Omega$ to 3 m$\Omega$. In an exemplary embodiment, the sheet resistance of the positive electrode active material layer may be selected from typical but non-limiting sheet resistances such as 0.5 m$\Omega$, 1 m$\Omega$, 1.5 m$\Omega$, 2 m$\Omega$, 2.5 m$\Omega$, 3 m$\Omega$, 3.5 m$\Omega$, 4 m$\Omega$, 4.5 m$\Omega$, 5 m$\Omega$, or a range defined by any two of these sheet resistance values. The electrode plate has the sheet-like morphology described above, so the electrode plate has two opposite surfaces. The sheet resistance refers to a resistance value between one surface and another opposite surface of the positive electrode having the sheet-like morphology. The sheet resistance in this range can effectively improve the performance such as the efficiency and the service life of the battery.

In some embodiments, the positive electrode according to the above embodiments is an electrode plate, and a ratio of a thickness from one surface to another opposite surface of the electrode plate to a thickness of the current collector is (6 to 15):1, optionally (8 to 14):1. In an exemplary embodiment, the ratio may be selected from typical but non-limiting ratios such as 6:1, 7:1, 8:1, 9:1, 10:1, 11:1, 12:1, 13:1, 14:1, 15:1, or a range defined by any two of these ratio values. The thickness refers to a vertical distance from one surface to another opposite surface of a layer structure. When the positive electrode active material layer is provided on one surface of the current collector as shown in FIG. 3, the thickness from one surface to another opposite surface of the electrode plate refers to a sum of a thickness of one positive electrode active material layer and a thickness of the current collector. When both surfaces of the current collector are provided with positive electrode active material layers as shown in FIG. 4, the thickness from one surface to another opposite surface of the electrode plate refers to a sum of total thicknesses of the two positive electrode active material layers and the thickness of the current collector.

In an embodiment, the thickness of the positive electrode active material layer contained in the electrode plate may be controlled to be 104 $\mu$m to 182 $\mu$m and may further be 110 $\mu$m to 170 $\mu$m. In an exemplary embodiment, the thickness of the positive electrode active material layer may be selected from typical but non-limiting thicknesses such as 104 $\mu$m, 110 $\mu$m, 120 $\mu$m, 130 $\mu$m, 140 $\mu$m, 150 $\mu$m, 160 $\mu$m, 170 $\mu$m, 180 $\mu$m, 182 $\mu$m, or a range defined by any two of these thickness values. In an embodiment, the thickness of the current collector may be but is not limited to 13 $\mu$m.

By controlling the total thickness of the electrode plate and the thickness of the current collector in the above ratio range or specific thickness range, the gram capacity of the electrode plate can be effectively increased, thereby increasing the energy density of the battery. In addition, the bonding strength between the positive electrode active material layer and the current collector can be improved, the mechanical strength of the electrode plate structure can be improved, and the cycling performance of the electrode plate can be improved.

Preparation method of positive electrode:

An embodiment of this application further provides a preparation method of the positive electrode according to the above embodiments. In some embodiments, the preparation method of the positive electrode according to the above embodiments includes the following steps.

S30: Mix components including a positive electrode active material, a binder, a conductive agent, and the like in a solvent in proportion to prepare a positive electrode slurry.

S40: The positive electrode slurry is subjected to film formation treatment on a current collector to form a positive electrode active material layer, to obtain the positive electrode.

Step S30:

The positive electrode active material in step S30 includes the positive electrode material according to the above embodiments of this application, specifically including the layered oxide represented by the above chemical formula (I).

The components such as the positive electrode active material, the binder, and the conductive agent in step S30 can be mixed according to percentages of the corresponding components contained in the positive electrode active material layer of the above positive electrode. The solvent may be an organic solvent, water, or the like suitable for preparing the positive electrode slurry.

The mixing treatment in step S30 can be performed according to a conventional electrode slurry preparation method, for example, including but not limited to stirring treatment until the components are uniformly dispersed to form a stable positive electrode slurry. Certainly, the viscosity and other properties of the positive electrode slurry should meet the requirements of the film formation process, so as to form a positive electrode active material layer meeting the quality requirements on the current collector.

Step S40:

Based on the components of the positive electrode slurry prepared in step S30, the positive electrode active material layer prepared in step S40 is the positive electrode active material layer contained in the positive electrode according to the above embodiments of this application.

The film formation treatment of the positive electrode slurry on the current collector in step S40 can be performed according to a conventional positive electrode active material layer method. For example, in an embodiment, the electrode slurry may be first formed into a wet film on the current collector; then drying treatment is performed to volatilize the solvent, so that the wet film is dried; and then the dried film layer is rolled to form the positive electrode active material layer, thereby obtaining the positive electrode.

Certainly, the positive electrode active material layer can alternatively be prepared using a method obtained after the conventional positive electrode active material layer preparation method is improved, or the positive electrode active material layer can alternatively be prepared using a new method, as long as the positive electrode active material layer prepared from the electrode slurry in step S30 on the current collector falls within the scope disclosed in the specification of the embodiments of this application.

In addition, the film formation treatment conditions in S40 can be controlled and adjusted. For example, the conditions for forming the wet film using the positive electrode slurry prepared in step S30 on the current collector, the rolling treatment conditions, and the like can be controlled and adjusted, so that the relevant performance of the formed positive electrode active material layer can be controlled and adjusted. For example, the content of the positive electrode active material layer on one surface of the current collector is controlled and adjusted to the foregoing range of 260 mg/1540.25mm$^2$ to 350 mg/1540.25mm$^2$. The compacted density is controlled and adjusted to the foregoing range of 2.8 g/cm$^3$ to 3.4 g/cm$^3$. The porosity is controlled and adjusted to the foregoing range of 40% to 65%. The sheet resistance of the electrode plate is controlled and adjusted to the foregoing range of 0.5 mΩ to 5 mΩ.

Battery

According to a fourth aspect, an embodiment of this application further provides a sodium battery.

In an embodiment, the sodium battery according to this embodiment of this application may include any one of a sodium battery cell, a battery module, and a battery pack.

Sodium battery cell:

A sodium battery cell, also known as a sodium cell, refers to including a battery outer package and an electrode assembly encapsulated in the battery outer package. One or more electrode assemblies may be included in the battery cell, which can be adjusted according to actual needs.

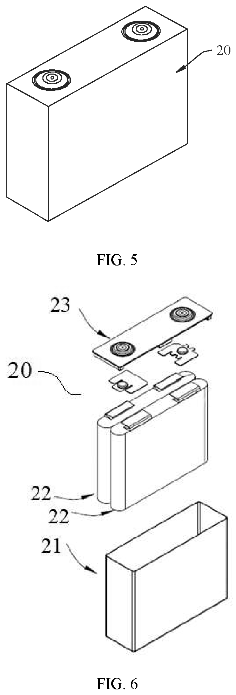

The outer package of the sodium battery cell may be a hard shell, such as a hard plastic shell, an aluminum shell, or a steel shell, or may be a soft package, such as a pouch soft package. The soft package may be made of plastic, such as polypropylene, polyethylene terephthalate, and polybutylene succinate. The outer package shape may be cylindrical, prismatic, or of any other shapes. The outer package shape gives the shape of the sodium battery cell. Therefore, the shape of the sodium battery cell may also be cylindrical, prismatic, or of any other shapes corresponding to the outer package shape. In an exemplary embodiment, the sodium battery cell may be a battery cell 20 with a prismatic structure as shown in FIG. 5.

In some embodiments, as shown in FIG. 6, the outer package of the battery cell 20 may include a housing 21 and a cover plate 23. The housing 21 may include a bottom plate and a side plate connected to the bottom plate, where the bottom plate and side plate enclose to form an accommodating cavity. The housing 21 has an opening in communication with the accommodating cavity. The cover plate 23 is configured to cover the opening to close the accommodating cavity. One or more electrode assemblies 22 are encapsulated in the accommodating cavity.

In an embodiment, the sodium battery cell may be a sodium battery cell containing a liquid electrolyte or a sodium battery cell containing a solid electrolyte.

When the sodium battery cell is a sodium battery cell containing a liquid electrolyte, the electrode assembly contained in the sodium battery cell typically includes a positive electrode, a negative electrode, and a separator. The positive electrode and the negative electrode are alternately stacked, and the separator is stacked between the positive electrode and the negative electrode to play a separation role and separate the positive electrode and the negative electrode. The positive electrode, the separator layer, and the negative electrode can form a stacked electrode assembly through a lamination process, or form an electrode assembly with a jelly-roll structure through a winding process. The electrode assembly containing the separator is placed in the outer package; the electrolyte is injected and the electrode assembly is wetted; and packaging is performed to obtain the sodium battery cell.

When the sodium battery cell is a sodium battery cell containing a solid electrolyte, the electrode assembly contained in the sodium battery cell typically includes a positive electrode, a negative electrode, and a solid electrolyte. The positive electrode and the negative electrode are alternately stacked, and the solid electrolyte is stacked between the positive electrode and the negative electrode to play a separation role and separate the positive electrode and the negative electrode. The electrode assembly containing the solid electrolyte is placed in the outer package, and packaging is performed to obtain the sodium battery cell.

In the above sodium battery cells, the positive electrode contained in the electrode assembly is the positive electrode according to the above embodiments of this application, that is, the positive electrode active material layer contains the positive electrode material according to the above embodiments of this application, specifically containing the layered oxide represented by the above chemical formula (I).

In this way, the sodium battery cell has a high energy density and good cycling performance.

For example, in an embodiment, upon testing, the energy density of the sodium battery cell can reach up to 110 Wh/kg to 160 Wh/kg, optionally 120 Wh/kg to 155 Wh/kg. A capacity retention rate after 1000 cycles under 0.5C/1C charge/discharge conditions in a range of 1.5 V to 4.05 V can reach up to 70% to 95%, optionally 80% to 90%.

In the above sodium battery cells, the negative electrode contained in the electrode assembly includes a negative electrode current collector, and optionally includes a negative electrode active material layer provided on the surface of the negative electrode current collector. The negative electrode active material layer contains a negative electrode active material. In an embodiment, the negative electrode current collector may include but is not limited to metal or a composite current collector. For example, as metal, sodium, sodium alloy, copper, copper alloy, nickel, nickel alloy, titanium, titanium alloy, silver, silver alloy, and the like can be used. In a case that sodium or sodium alloy is used as the negative electrode current collector, since sodium or sodium alloy can also serve as the negative electrode active material, the negative electrode plate may include no negative electrode active material layer, and sodium or sodium alloy serves as both the current collector and the negative electrode active material.

The composite current collector may include a composite material of a polymer material and metal. The polymer material may include but is not limited to polypropylene (PP), polyethylene terephthalate (PET), polybutylene terephthalate (PBT), polystyrene (PS), polyethylene (PE), and the like. The metal may include but is not limited to sodium, copper, copper alloy, nickel, nickel alloy, titanium, titanium alloy, silver, and silver alloy. The composite current collector can be obtained by mutual mixing of the polymer material and the metal, or by electroplating, coating, or other methods to cover at least one side of the polymer material.

When the negative electrode includes the negative electrode active material layer, the negative electrode active material in the negative electrode active material layer may include any one or a mixture or composite material formed by several of a carbon-based material, an alloy material, a titanium-based material, and sodium metal. The carbon-based material includes but is not limited to one or more of graphite, soft carbon, hard carbon, carbon microspheres, and carbon fiber. The alloy material includes but is not limited to one or more of sodium-tin alloy, sodium-germanium alloy, and sodium-antimony alloy. The titanium-based material includes but is not limited to one or more of titanium dioxide, titanate, and titanium phosphate.

A mass percentage of the negative electrode active material in the negative electrode active material layer may be 85% to 98%, optionally 95% to 98%. In an exemplary embodiment, the mass percentage of the negative electrode active material may be selected from typical but non-limiting percentages such as 85%, 90%, 91%, 92%, 93%, 94%, 95%, 96%, 97%, 98%, or a range defined by any two of these percentage values.

The negative electrode active material layer may further include at least one of a conductive agent and a binder. The conductive agent is used for collecting current between negative electrode active materials and between the active material and the current collector, thereby improving the electron conductivity. In addition, the conductive agent can also accelerate the infiltration of the electrolyte at the negative electrode plate. The binder can improve the bonding strength between the materials in the negative electrode active material layer and the bonding strength between the active layer and the current collector.

In an embodiment, a mass percentage of the conductive agent in the negative electrode active material layer may be 0.5% to 10%. In an exemplary embodiment, the mass percentage of the conductive agent may be selected from typical but non-limiting contents such as 0.5%, 1%, 2%, 3%, 4%, 5%, 6%, 7%, 8%, 9%, 10%, or a range defined by any two of these percentage values, and may alternatively be set to another percentage as needed. In an exemplary embodiment, the conductive agent includes one or more of acetylene black (SP), carbon nanotubes, conductive carbon black (super-P), Ketjen black, carbon fiber, and graphene.

In an embodiment, a mass percentage of the binder in the negative electrode active material layer may be 0.5% to 10%. In an exemplary embodiment, the mass percentage of the binder may be selected from typical but non-limiting percentages such as 0.5%, 1%, 2%, 3%, 4%, 5%, 6%, 7%, 8%, 9%, 10%, or a range defined by any two of these percentage values, and may alternatively be set to another percentage as needed. In an exemplary embodiment, the binder includes but is not limited to one or more of polyvinylidene fluoride, polyvinylidene fluoride-hexafluoropropylene copolymer, polyoxyethylene, polyimide, polytetrafluoroethylene, polybutyl acrylate, polyacrylonitrile, carboxymethyl cellulose, carboxymethyl cellulose salt, polyacrylic acid, polyacrylate, polyvinyl alcohol, sodium alginate, cyclodextrin, styrene-butadiene rubber, vinyl acetate resin, acrylic resin, and chlorinated rubber.

In an embodiment, the negative electrode active material layer further optionally includes a thickener. For example, the thickener may be but is not limited to carboxymethyl cellulose (CMC). A mass percentage of the thickener in the negative electrode active layer may be set to 0.5% to 5%. In an exemplary embodiment, the mass percentage of the thickener may be selected from typical but non-limiting contents such as 0.5%, 1%, 1.5%, 2%, 2.5%, 3%, 3.5%, 4%, 4.5%, 5%, or a range defined by any two of these percentage values.

In an embodiment, when each of the above sodium battery cells includes a separator, the separator, as described above, is disposed between the positive electrode and the negative electrode to separate the positive electrode and the negative electrode. The separator can prevent electrons in the battery from passing freely and prevent short circuit due to contact between the electrodes, but can allow sodium ions in the electrolyte to pass freely between the positive electrode and the electrode plate. The separator may be any known porous separator with electrochemical stability and mechanical stability. In an exemplary embodiment, the separator includes a single-layer or multi-layer film made of at least one of glass fiber, non-woven fabric, polyethylene (PE), polypropylene (PP), and polyvinylidene fluoride (PVDF), and the like.

In an embodiment, when each of the above sodium battery cells contains a solid electrolyte, the solid electrolyte, as described above, is provided between the positive electrode and the negative electrode to separate the positive electrode and the negative electrode. The solid electrolyte may include at least one of a polymer solid electrolyte, an oxide electrolyte, a sulfide electrolyte, a borohydride electrolyte, a composite solid electrolyte, and the like.

Battery module:

When the sodium battery according to the embodiments of this application is a battery module, the battery module is assembled by the above sodium battery cells, that is, the battery module may include a plurality of sodium battery cells as described above, and a specific quantity can be adjusted according to the application and capacity of the battery module.

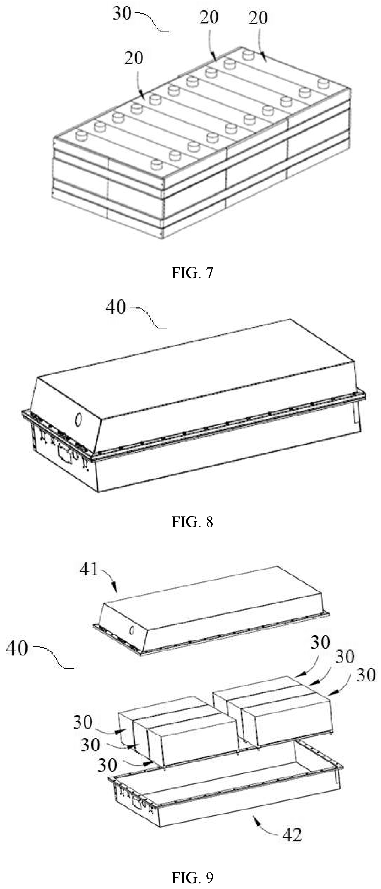

In some embodiments, FIG. 7 is a schematic diagram of a battery module 30 as an example. As shown in FIG. 7, in the battery module 30, a plurality of sodium battery cells 20 may be sequentially arranged along a length direction of the battery module 30. Certainly, the sodium battery cells 20 may alternatively be arranged in any other manner. Further, the plurality of battery cells 20 can be fixed by fasteners.

Optionally, the battery module 30 may further include a shell with an accommodating space, and the plurality of sodium battery cells 20 are accommodated in the accommodating space.

Battery pack:

When the sodium battery according to the embodiments of this application is a battery pack, the battery pack is assembled by the above sodium battery cells, that is, the battery pack may include a plurality of sodium battery cells, and the plurality of sodium battery cells are assembled into the above battery module. The specific quantity of battery cells or battery modules included in the battery pack can be adjusted according to the application and capacity of the battery pack.

In some embodiments, FIGs. 8 and 9 show a schematic diagram of a battery pack 40 as an example. The battery pack 40 may include a battery box and a plurality of battery modules 30 disposed in the battery box. The battery box includes an upper box body 41 and a lower box body 42. The upper box body 41 is configured to cover the lower box body 42 to form a closed space for accommodating the battery modules 30. The plurality of battery modules 30 may be arranged in the battery box in any manner.

Electric apparatus

According to a fifth aspect, an embodiment of this application further provides an electric apparatus. The electric apparatus according to this embodiment of this application includes a power source unit or an energy storage unit. Certainly, the electric apparatus may alternatively include other auxiliary components or necessary components. The power source unit or the energy storage unit includes the sodium battery according to the above embodiments of this application. For example, the power source unit or the energy storage unit may be the above sodium battery cell, battery module, or battery pack. Since the electric apparatus according to this embodiment of this application includes the sodium battery according to the above embodiments of this application, the power source unit or the energy storage unit of the electric apparatus according to this embodiment of this application has a high energy density, good cycling performance, and long service life. The standby or endurance time of the electric apparatus according to this embodiment of this application is long.

In an embodiment, the electric apparatus may include but is not limited to a mobile phone, a tablet computer, a notebook computer, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like. As the electric apparatus, a battery cell, a battery module, or a battery pack in the battery can be selected according to its usage needs.

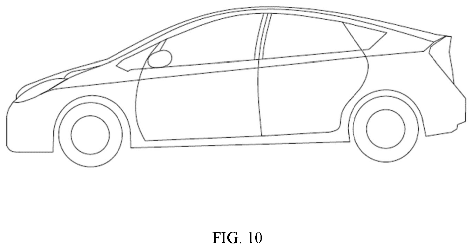

FIG. 10 is a schematic diagram of an electric apparatus as an example. The electric apparatus is a battery electric vehicle, a hybrid electric vehicle, a plug-in hybrid electric vehicle, or the like. To meet the requirements of the electric apparatus for high power and high energy density, a battery pack or a battery module may be used.

In an embodiment, when the electric apparatus includes an energy storage unit, the electric apparatus may be an energy storage apparatus. The energy storage apparatus includes the energy storage unit. Certainly, the energy storage apparatus may alternatively include other auxiliary components or necessary components. The energy storage unit includes the battery according to the above embodiments of this application. One or more batteries may be included in the energy storage unit. When a plurality of batteries may be included, the plurality of batteries can form a battery module or a battery pack. Since the energy storage apparatus according to this embodiment of this application includes the battery according to the above embodiments of this application, the energy storage apparatus has a high energy density, good cycling performance, and long service life, and the energy density is further high.

Examples

The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

1. Examples of positive electrode material and preparation method thereof

Example A1

This example provides a positive electrode material and a preparation method thereof. The positive electrode material includes a layered oxide with a chemical formula $Na_{0.89}Ni_{0.23}Mn_{0.45}Fe_{0.3}Zn_{0.02}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.45}Fe_{0.3}Zn_{0.02}O_2$ at a rotation speed of 500 rpm for 6 hours, then add excess sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.45}Fe_{0.3}Zn_{0.02}O_2$, where conditions of the sintering treatment are as follows: a temperature is 850°C; a time is 12 h; a heating rate is 5°C/min; and an atmosphere is an oxygen atmosphere.

Example A2

This example provides a positive electrode material and a preparation method thereof. The positive electrode material includes a layered oxide with a chemical formula $Na_{0.89}Ni_{0.23}Mn_{0.44}Fe_{0.3}Zn_{0.03}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.44}Fe_{0.3}Zn_{0.03}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.44}Fe_{0.3}Zn_{0.03}O_2$, where conditions of the sintering treatment are as follows: a temperature is 860°C; a time is 12 h; a heating rate is 5°C/min; and an atmosphere is an oxygen atmosphere.

Example A3

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Cu_{0.02}O_2$.

The preparation method of the positive electrode material includes the following steps.

S1: Perform ball milling treatment on NiO, ZnO, $Mn_2O_3$, $Fe_2O_3$, and CuO according to a molar ratio of metal elements contained in $Na_{0.85}Ni_{0.23}Mn_{0.42}Fe_{0.28}Zn_{0.04}Cu_{0.02}O_2$ at 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Cu_{0.02}O_2$, where conditions of the sintering treatment are as follows: a temperature is 865°C; a time is 12 h; a heating rate is 5°C/min; and an atmosphere is an oxygen atmosphere.

Example A4

This example provides a positive electrode material and a preparation method thereof. The positive electrode material includes a layered oxide with a chemical formula $Na_{0.89}Ni_{0.23}Mn_{0.42}Fe_{0.3}Zn_{0.05}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.42}Fe_{0.3}Zn_{0.05}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.42}Fe_{0.3}Zn_{0.05}O_2$, where conditions of the sintering treatment are as follows: a temperature is 865°C; a time is 12 h; a heating rate is 5°C/min; and an atmosphere is an oxygen atmosphere.

Example A5

This example provides a positive electrode material and a preparation method thereof. The positive electrode material includes a layered oxide with a chemical formula $Na_{0.89}Ni_{0.23}Mn_{0.41}Fe_{0.3}Zn_{0.06}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.41}Fe_{0.3}Zn_{0.06}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.41}Fe_{0.3}Zn_{0.06}O_2$, where conditions of the sintering treatment are as follows: a temperature is 865°C; a time is 12 h; a heating rate is 5°C/min; and an atmosphere is an oxygen atmosphere.

Example A6

This example provides a positive electrode material and a preparation method thereof. The positive electrode material includes a layered oxide with a chemical formula $Na_{0.89}Ni_{0.23}Mn_{0.42}Fe_{0.285}Zn_{0.065}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.42}Fe_{0.285}Zn_{0.065}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.42}Fe_{0.285}Zn_{0.065}O_2$, where conditions of the sintering treatment are as follows: a temperature is 865°C; a time is 12 h; a heating rate is 5°C/min; and an atmosphere is an oxygen atmosphere.

Example A7

This example provides a positive electrode material and a preparation method thereof. The positive electrode material includes a layered oxide with a chemical formula $Na_{0.89}Ni_{0.23}Mn_{0.42}Fe_{0.28}Zn_{0.07}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.89}Ni_{0.23}Mn_{0.42}Fe_{0.28}Zn_{0.07}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.89}Ni_{0.23}Mn_{0.42}Fe_{0.28}Zn_{0.07}O_2$, where conditions of the sintering treatment are as follows: a temperature is 880°C; a time is 12 h; a heating rate is 5°C/min; and an atmosphere is an oxygen atmosphere.

Example A8

This example provides a positive electrode material and a preparation method thereof. The positive electrode material includes a layered oxide with a chemical formula $Na_{0.9}Ni_{0.23}Mn_{0.4}Fe_{0.3}Zn_{0.075}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.9}Ni_{0.23}Mn_{0.4}Fe_{0.3}Zn_{0.075}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.9}Ni_{0.23}Mn_{0.4}Fe_{0.3}Zn_{0.075}O_2$, where conditions of the sintering treatment are as follows: a temperature is 880°C; a time is 10 h; a heating rate is 5°C/min; and an atmosphere is an oxygen atmosphere.

Example A9

This example provides a positive electrode material and a preparation method thereof. The positive electrode material includes a layered oxide with a chemical formula $Na_{0.9}Ni_{0.23}Mn_{0.4}Fe_{0.3}Zn_{0.075}O_2$.

The preparation method of the positive electrode material includes the following steps.

S1: Fully dissolve nickel nitrate, zinc nitrate, manganese nitrate, iron nitrate according to a molar ratio of metal elements contained in $Na_{0.9}Ni_{0.23}Mn_{0.4}Fe_{0.3}Zn_{0.075}O_2$ to prepare a mixed solution, then add sufficient ammonium carbonate to the mixed solution for co-precipitation treatment to obtain a precipitate mixture.

S2: Mix the precipitate mixture with sodium carbonate according to a molar ratio of the sodium element in $Na_{0.9}Ni_{0.23}Mn_{0.4}Fe_{0.3}Zn_{0.075}O_2$ to obtain a precursor of $Na_{0.9}Ni_{0.23}Mn_{0.4}Fe_{0.3}Zn_{0.075}O_2$.

S3: Perform sintering treatment on the precursor of $Na_{0.9}Ni_{0.23}Mn_{0.4}Fe_{0.3}Zn_{0.075}O_2$ in a muffle furnace, and pulverize the precursor to obtain a layered oxide $Na_{0.9}Ni_{0.23}Mn_{0.4}Fe_{0.3}Zn_{0.075}O_2$, where conditions of the sintering treatment are as follows: a temperature is 850°C; a time is 14 h; a heating rate is 5°C/min; and an atmosphere is an oxygen atmosphere.

Example A10

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Al_{0.02}O_2$.

The preparation method of the positive electrode material includes the following steps.

S1: Perform ball milling treatment on NiO, ZnO, $Mn_2O_3$, and $Al_2O_3$ according to the molar ratio of metal elements contained in $Na_{0.85}Ni_{0.23}Mn_{0.42}Fe_{0.28}Zn_{0.04}Al_{0.02}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Al_{0.02}O_2$, where conditions of the sintering treatment are as follows: a temperature is 850°C; a time is 12 h; a heating rate is 5°C/min; and an atmosphere is an oxygen atmosphere.

Example A11

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Sn_{0.02}O_2$.

The preparation method of the positive electrode material includes the following steps.

S1: Perform ball milling treatment on NiO, ZnO, $Mn_2O_3$, and $SnO_2$ according to a molar ratio of metal elements contained in $Na_{0.85}Ni_{0.23}Mn_{0.42}Fe_{0.28}Zn_{0.04}Sn_{0.02}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Sn_{0.02}O_2$, where conditions of the sintering treatment are as follows: a temperature is 850°C; a time is 12 h; a heating rate is 5°C/min; and an atmosphere is an oxygen atmosphere.

Example A12

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Ti_{0.02}O_2$.

The preparation method of the positive electrode material includes the following steps.

S1: Perform ball milling treatment on NiO, ZnO, $Mn_2O_3$, and $TiO_2$ according to a molar ratio of metal elements contained in $Na_{0.85}Ni_{0.23}Mn_{0.42}Fe_{0.28}Zn_{0.04}Ti_{0.02}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Ti_{0.02}O_2$, where conditions of the sintering treatment are as follows: a temperature is 850°C; a time is 12 h; a heating rate is 5°C/min; and an atmosphere is an oxygen atmosphere.

Example A13

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Mg_{0.02}O_2$.

The preparation method of the positive electrode material includes the following steps.

S1: Perform ball milling treatment on NiO, ZnO, $Mn_2O_3$, and MgO according to a molar ratio of metal elements contained in $Na_{0.85}Ni_{0.23}Mn_{0.42}Fe_{0.28}Zn_{0.04}Mg_{0.02}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Mg_{0.02}O_2$, where conditions of the sintering treatment are as follows: a temperature is 850°C; a time is 12 h; a heating rate is 5°C/min; and an atmosphere is an oxygen atmosphere.

**Example A14**

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Ir_{0.02}O_2$.

The preparation method of the positive electrode material includes the following steps.

S1: Perform ball milling treatment on NiO, ZnO, $Mn_2O_3$, and $IrO_2$ according to a molar ratio of metal elements contained in $Na_{0.85}Ni_{0.23}Mn_{0.42}Fe_{0.28}Zn_{0.04}Ir_{0.02}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Ir_{0.02}O_2$, where conditions of the sintering treatment are as follows: a temperature is 850°C; a time is 12 h; a heating rate is 5°C/min; and an atmosphere is an oxygen atmosphere.

**Example A15**

This example provides a positive electrode material and a preparation method thereof. The positive electrode material includes a layered oxide with a chemical formula $Na_{0.85}Ni_{0.23}Mn_{0.42}Fe_{0.28}Zn_{0.04}Ir_{0.02}O_{1.8}$.

The preparation method of the positive electrode material includes the following steps.

S1: Perform ball milling treatment on NiO, ZnO, $Mn_2O_3$, and $IrO_2$ according to a molar ratio of metal elements contained in $Na_{0.85}Ni_{0.23}Mn_{0.42}Fe_{0.28}Zn_{0.04}Ir_{0.02}O_{1.8}$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.85}Ni_{0.23}Mn_{0.42}Fe_{0.28}Zn_{0.04}Ir_{0.02}O_{1.8}$, where conditions of the sintering treatment are as follows: a temperature is 700°C; a time is 20 h; a heating rate is 15°C/min; and an atmosphere is an oxygen atmosphere.

**Comparative Example A1**

This comparative example provides a positive electrode material and a preparation method thereof. The positive electrode material includes a layered oxide with a chemical formula $Na_{0.92}Ni_{0.33}Mn_{0.33}Fe_{0.33}Zn_{0.01}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.92}Ni_{0.33}Mn_{0.33}Fe_{0.33}Zn_{0.01}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.92}Ni_{0.33}Mn_{0.33}Fe_{0.33}Zn_{0.01}O_2$, where conditions of the sintering treatment are as follows: a temperature is 900°C; a time is 12 h; a heating rate is 5°C/min; and an atmosphere is an oxygen atmosphere.

**Comparative Example A2**

This comparative example provides a positive electrode material and a preparation method thereof. The positive electrode material includes a layered oxide with a chemical formula $Na_{0.92}Ni_{0.25}Mn_{0.33}Fe_{0.33}Zn_{0.08}O_2$.

The preparation method of the positive electrode material includes the following steps.

S1: Perform ball milling treatment on NiO, ZnO, $Mn_2O_3$, and $Fe_2O_3$ according to a molar ratio of metal elements contained in $Na_{0.92}Ni_{0.25}Mn_{0.33}Fe_{0.33}Zn_{0.08}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.92}Ni_{0.25}Mn_{0.33}Fe_{0.33}Zn_{0.08}O_2$, where conditions of the sintering treatment are as follows: a temperature is 900°C; a time is 12 h; a heating rate is 5°C/min; and an atmosphere is an oxygen atmosphere.

**Comparative Example A3**

This comparative example provides a positive electrode material and a preparation method thereof. The positive electrode material includes a layered oxide with a chemical formula $Na_{0.94}Ni_{0.33}Mn_{0.33}Fe_{0.33}O_2$.

The preparation method of the positive electrode material includes the following steps.

S1: Perform ball milling treatment on NiO, $Mn_2O_3$, and $Fe_2O_3$ according to a molar ratio of metal elements contained in $Na_{0.94}Ni_{0.33}Mn_{0.33}Fe_{0.33}O_2$ at a rotation speed of 500 rpm for 6 hours, then add sodium carbonate in proportion for mixing treatment to obtain a precursor.

S2: Perform sintering treatment on the precursor in a muffle furnace, and pulverize the precursor to obtain a layered oxide $Na_{0.92}Ni_{0.25}Mn_{0.33}Fe_{0.33}O_2$, where conditions of the sintering treatment are as follows: a temperature is 900°C; a time is 12 h; a heating rate is 5°C/min; and an atmosphere is an oxygen atmosphere.

Characterization and related performance tests of layered oxides in examples:

The layered oxides provided according to the above Examples A1 to A15 and Comparative Examples A1 to A3 were respectively subjected to tests of relevant characteristics in Table 1 below according to the following methods, and the test results were shown in Table 1.

Layered oxide element content test method: Inductively coupled plasma emission spectroscopy (ICP) was obtained using Agilent ICP-OES730, and then ICP results were used to calculate contents of metal elements, thereby calculating mass percentages of components.

Single crystal morphology test method: Scanning electron microscopy (SEM) was performed on the layered oxides provided in the examples using a scanning electron microscopy measurement method for micron-level lengths in GB/T 16594-1996. The electron micrograph of the layered oxide provided in Example A6 was shown in FIG. 1.

Crystal phase characterization method: The layered oxide was analyzed using an XRD diffractometer at a scanning speed of 0.5°C/min.

$D_v50$ test method: The layered oxide was analyzed according to the method steps in GB/T16418.

BET specific surface test method: The specific surface of the layered oxide was tested according to the method steps in GB/T19587-2017.

Compacted density (compacted density) test method: Testing was performed with reference to the standard test method in GB/T24533-2019, with specific reference to the following test steps.

(1) Upper and lower gaskets, a top column, and a metal cylindrical sleeve of a compacted density instrument were wiped with a clean soft cloth (tissue), and wiped with a soft cloth dipped in anhydrous ethanol and air dried if necessary.

(2) After placed in order for testing, the gaskets, the top column, the metal cylindrical sleeve, and a pad were placed on a digital thickness gauge, and a zero key was pressed.

(3) The top column and the upper gasket were taken out, 1 g of a sample was weighed and placed into the sleeve, the weight was accurate to 0.0001 g, and the weight was recorded as m.

(4) The gaskets and the top column were slowly slid down from a hole respectively and then mounted together with the pad on the compacted density instrument, and a pressure control knob was tightened.

(5) A pressure lever was shaken, and a value on a digital pressure gauge of the compacted density instrument was observed at the same time. After the value reached up to a specified value of 2200 lb, a stopwatch was started. After 30s, the pressure control knob was loosened, and the pressure was removed. Then, the pad dropped to a certain height. Then, the pressure control knob was tightened again.

(6) The top column, the sleeve, and the gaskets together with the pad were placed on the digital thickness gauge, and a value on the digital thickness gauge was read within 10s and recorded as H.

$$r=10m/(S\times H).$$

Then, the powder compacted density r of the sample was calculated according to the formula $r=10m/(S\times H)$.

A weight of the sample was denoted as mm, in grams (g). A thickness of the sample after compacted was denoted as HH, in millimeters (mm). A cross-sectional area of the top column was denoted as SS, in square centimeters ($cm^2$).

Charge/discharge gram capacity test method: Testing was performed according to the charge/discharge gram capacity test method of the layered oxide according to the above embodiments of this application.

Table 1

| Example | Chemical formula of layered oxide | Molar ratio of (Ni+Mn+Fe+Zn+M):Na | Molar ratios of Zn:Ni and Zn:Mn | Crystal phase | $D_v50$ ($\mu$m) | Compacted density (g/cm$^3$) | Charge/discharge gram capacity (mAh/g) |
|---|---|---|---|---|---|---|---|
| Example A1 | $Na_{0.89}Ni_{0.23}Mn_{0.45}Fe_{0.3}Zn_{0.02}O_2$ | 1: 0.89 | Zn:Ni=1:11.5 Zn:Mn=1:10.5 | 03 | 4.5 | 2T, 3.05 3T, 3.15 | 165/159 |
| Example A2 | $Na_{0.89}Ni_{0.23}Mn_{0.44}Fe_{0.3}Zn_{0.03}O_2$ | 1: 0.89 | Zn:Ni=1:7.67 Zn:Mn=1:14.67 | 03 | 5 | 2T, 3.06 3T, 3.15 | 165/159 |
| Example A3 | $Na_{0.85}Ni_{0.23}Mn_{0.42}Fe_{0.2}5Zn_{0.04}CU_{0.02}O_2$ | 0.99: 0.85 | Zn:Ni=1: 5.75 Zn:Mn=1:10.5 | 03 | 5.2 | 2T, 3.05 3T, 3.17 | 167/160 |
| Example A4 | $Na_{0.89}Ni_{0.23}Mn_{0.42}Fe_{0.3}Zn_{0.05}O_2$ | 1: 0.89 | Zn:Ni=1:4.6 Zn:Mn=1:8.4 | 03 | 5.7 | 2T, 3.05 3T, 3.18 | 168/161 |
| Example A5 | $Na_{0.89}Ni_{0.23}Mn_{0.41}Fe_{0.3}Zn_{0.06}O_2$ | 1: 0.89 | Zn:Ni=1:3.83 Zn:Mn=1:6.83 | 03 | 6 | 2T, 3.05 3T, 3.2 | 169/161 |
| Example A6 | $Na_{0.89}Ni_{0.23}Mn_{0.42}Fe_{0.285}Zn_{0.063}O_2$ | 1: 0.89 | Zn:Ni=1:3.54 Zn:Mn=1:6.46 | 03 | 6.2 | 2T, 3.05 3T, 3.19 | 169/162 |
| Example A7 | $Na_{0.89}Ni_{0.23}Mn_{0.42}Fe_{0.28}Zn_{0.07}O_2$ | 1: 0.89 | Zn:Ni=1:3.29 Zn:Mn=1:6 | 03 | 6.5 | 2T, 3.05 3T, 3.2 | 170/162 |
| Example A8 | $Na_{0.9}Ni_{0.23}Mn_{0.4}Fe_{0.3}Zn_{0.075}O_2$ | 1.005: 0.9 | Zn:Ni=1:3.07 Zn:Mn=1:5.33 | 03 | 7 | 2T 3.05 3T 3.12 | 171/163 |
| Example A9 | $Na_{0.9}Ni_{0.23}Mn_{0.4}Fe_{0.3}Zn_{0.073}O_2$ | 1.005: 0.9 | Zn:Ni=1:3.07 Zn:Mn=1:5.33 | 03 | 8 | 2T, 2.9 3T, 3.15 | 169/162 |
| Example A10 | $Na_{0.85}Ni_{0.23}Mn_{0.42}Fe_{0.28}Zn_{0.04}Al_{0.02}O_2$ | 0.99: 0.85 | Zn:Ni=1:5.75 Zn:Mn=1:10.5 | 03 | 5 | 2T, 3.05 3T, 3.17 | 167/159 |
| Example A11 | $Na_{0.85}Ni_{0.23}Mn_{0.42}Fe_{0.28}Zn_{0.04}Sn_{0.02}O_2$ | 0.99: 0.85 | Zn:Ni=1:5.75 Zn:Mn=1:10.5 | 03 | 5.6 | 2T, 3.05 3T, 3.17 | 168/161 |
| Example A12 | $Na_{0.85}Ni_{0.23}Mn_{0.42}Fe_{0.28}Zn_{0.04}Ti_{0.02}O_2$ | 0.99: 0.85 | Zn:Ni=1:5.75 Zn:Mn=1:10.5 | 03 | 5.8 | 2T, 3.05 3T, 3.17 | 166/159 |
| Example A13 | $Na_{0.85}Ni_{0.23}Mn_{0.42}Fe_{0.28}Zn_{0.04}Mg_{0.02}O_2$ | 0.99: 0.85 | Zn:Ni=1:5.75 Zn:Mn=1:10.5 | 03 | 5.1 | 2T, 3.05 3T, 3.17 | 167/161 |
| Example A14 | $Na_{0.85}Ni_{0.23}Mn_{0.42}Fe_{0.28}Zn_{0.04}Ir_{0.02}O_2$ | 0.99: 0.85 | Zn:Ni=1:5.75 Zn:Mn=1:10.5 | 03 | 5.6 | 2T, 3.05 3T, 3.17 | 168/160 |

| Example | Chemical formula of layered oxide | Molar ratio of (Ni+Mn+Fe+Zn+M):Na | Molar ratios of Zn:Ni and Zn:Mn | Crystal phase | $D_v50$ ($\mu$m) | Compacted density (g/cm$^3$) | Charge/discharge gram capacity (mAh/g) |
|---|---|---|---|---|---|---|---|
| Example A15 | $Na_{0.85}NI_{0.23}Mn_{0.42}Fe_{0.23}Zn_{0.04}Ir_{0.02}O_{1.8}$ | 0.99: 0.85 | Zn:Ni=1:5.75 Zn:Mn=1:10.5 | 03 | 5.6 | 2T, 3.05 3T, 3.17 | 167/159 |
| Comparative Example A1 | $Na_{0.92}Ni_{0.33}Mn_{0.33}Fe_{0.33}Zn_{0.01}O_2$ | 1: 0.92 | Zn:Ni=1:33 Zn:Mn=1:33 | 03 | 5.2 | 2T, 2.9 3T, 3.05 | 160/155 |
| Comparative Example A2 | $Na_{0.85}Ni_{0.23}Mn_{0.42}Fe_{0.28}Zn_{0.08}O_2$ | 1.01: 0.95 | Zn:Ni=1:2.875 Zn:Mn=1:5.25 | 03 | 5.2 | 2T, 2.95 3T, 3.1 | 169/161 |
| Comparative Example A3 | $Na_{0.94}Ni_{0.33}Mn_{0.33}Fe_{0.33}O_2$ | 0.99: 0.94 | / | 03 | 5.2 | 2T, 2.8 3T, 2.95 | 172/160 |

From the relevant performance test results of the layered oxides provided in the examples in Table 1 above, it can be seen that the layered oxides with low contents of the zinc element provided in Examples A1 to A15 have similar crystal phases and particle sizes compared to those in Comparative Examples A1 to A3; however, the material compacted densities of the layered oxides in Examples A1 to A15 are slightly higher than those of the layered oxides in Comparative Examples A1 to A3. Further testing shows that the specific surface areas of the layered oxide particles in Examples A1 to A15 are in the range of 0.5 $m^2$/g to 1.3 $m^2$/g, further 0.6 $m^2$/g to 0.9 $m^2$/g. The charge/discharge gram capacities of the layered oxides in Comparative Examples A2 to A3 are higher than those in Examples A1 to A15, but combined with the data in Table 3 below, due to the poor structural stability of Comparative Examples A2 to A3, their cycling performance is significantly lower than that of the layered oxides in Examples A1 to A15.

2. Examples of positive electrodes and sodium-ion battery cells

Examples B1 to B15

Examples B1 to B15 each provide a sodium-ion battery cell, where each sodium-ion battery cell includes an electrode assembly formed by a positive electrode plate, a separator, and a negative electrode plate, and further includes an electrolyte.

The sodium-ion battery cell in each of Examples B1 to B15 is assembled as follows.

Positive electrode plate: A sodium-ion positive electrode active material, a conductive agent carbon nanotubes, a conductive agent carbon black, and a binder polyvinylidene fluoride (PVDF) are fully stirred and mixed at a weight ratio of 95:0.5:2:2.5 in an appropriate amount of solvent NMP to form a uniform positive electrode slurry; and the positive electrode slurry is uniformly applied on a surface of a positive electrode current collector aluminum foil with a thickness of 13 $\mu$m, followed by drying and cold pressing, to obtain a positive electrode plate. The sodium-ion positive electrode active material is the positive electrode material in each of the above Examples A1 to A15. Positive electrode plates containing the positive electrode materials in the above Examples A1 to A15 are prepared respectively. No conductive agent carbon nanotubes are provided in Example B15 (the entire conductive agent is the conductive agent carbon black), that is, the conductive agent carbon nanotubes in Example B1 are replaced with the conductive agent carbon black. Compared with the positive electrode plate in Example B1, 0.5% carbon nanotube conductive agent in Example B1 is replaced with the conductive agent carbon black, but a total amount of the conductive agents in the positive electrode plate of Example B15 is the same as a total amount of the conductive agents in the positive electrode plate of Example B1.

Negative electrode plate: Hard carbon, a conductive agent SP, a CMC binder are added to deionized water at a weight ratio of 8:1:1 and fully stirred and mixed to form a uniform negative electrode slurry; and the negative electrode slurry is uniformly applied on a surface of a copper foil with a thickness of 6 $\mu$m, followed by drying and cold pressing, to obtain a negative electrode plate.

Electrolyte: In an environment with water content less than 10 ppm, non-aqueous organic solvents ethylene carbonate EC and diethyl carbonate DMC are mixed at a volume ratio of 1:1 to obtain an electrolyte solvent, then sodium hexafluorophosphate and the mixed solvent are mixed and prepared into an electrolyte containing a sodium salt with a concentration of 1 mol/L.

Separator: A porous polyethylene (PE) film is used as a separator.

Battery assembly: The above positive electrode plate, separator, and negative electrode plate are stacked in sequence respectively, with the separator placed between the positive electrode plate and negative electrode plate to play a separation role, and an electrode assembly is obtained through a lamination process. Each electrode assembly is placed in an outer package. After drying is performed, the electrolyte is injected. Then, processes such as vacuum packaging, standing, formation, and shaping are performed to obtain the sodium-ion battery cell in each of Examples B1 to B10. The sodium-ion positive electrode active material contained in Example B1 is the positive electrode material in the above Example A1, the sodium-ion positive electrode active material contained in Example B2 is the positive electrode material in the above Example A2, and so on, the sodium-ion positive electrode active material contained in Example B15 is the positive electrode material in the above Example A15.

Examples B16 to B24

Examples B16 to B24 each provide a sodium-ion battery cell, where each sodium-ion battery cell includes an electrode assembly formed by a positive electrode plate, a separator, and a negative electrode plate, and further includes an electrolyte.

The sodium-ion battery cell in each of Examples B16 to B24 is prepared with reference to the sodium-ion battery cell in Example B3, with the difference as follows:

In the sodium-ion battery cell in each of Examples B16 to B18, the content (CW) of a positive electrode active material layer contained in the positive electrode plate of each sodium-ion battery cell on one surface of a current collector is controlled to be the content in Table 2.

In the sodium-ion battery cell in each of Examples B19 to B21, a compacted density of the positive electrode active material layer contained in the positive electrode plate of each sodium-ion battery cell is controlled to be the content in Table 2.

In the sodium-ion battery cell in each of Examples B22 and B23, a percentage of carbon nanotubes contained in the positive electrode plate of each sodium-ion battery cell is controlled to be the percentage in Table 2. A total percentage of conductive agent contents in the positive electrode plate in each of Examples B22 to B23 is the same as a total percentage of conductive agents in the positive electrode plate of Example B1.

In the sodium-ion battery cell of Example B24, the carbon nanotubes contained in the positive electrode plate of the sodium-ion battery cell are replaced with 1% of carbon fiber, as shown in Table 2. A total percentage of conductive agents in the positive electrode plate of Example B24 is the same as a total percentage of conductive agents in the positive electrode plate of Example B1.

Comparative Examples B1 to B3

Comparative Examples B1 to B3 each provide a sodium-ion battery cell, where each sodium-ion battery cell includes an electrode assembly formed by a positive electrode plate, a separator, and a negative electrode plate, and further includes an electrolyte.

The sodium-ion battery cell in each of Comparative Examples B1 to B3 is prepared with reference to the sodium-ion battery cell in Example B1, with the difference as follows:

In the sodium-ion battery cell of Comparative Example B1, a sodium-ion positive electrode active material contained in the positive electrode plate of the sodium-ion battery cell is the sodium-ion positive electrode material in Comparative Example A1, as shown in Table 1.

In the sodium-ion battery cell of Comparative Example B2, a sodium-ion positive electrode active material contained in the positive electrode plate of the sodium-ion battery cell is the sodium-ion positive electrode material in Comparative Example A2, as shown in Table 1.

In the sodium-ion battery cell of Comparative Example B3, a sodium-ion positive electrode active material contained in the positive electrode plate of the sodium-ion battery cell is the sodium-ion positive electrode material in Comparative Example A3, as shown in Table 1.

Relevant performance test of positive electrode plate included in sodium-ion battery cell in each example:

The positive electrode plate included in the sodium-ion battery cell provided in each of the above Examples B1 to B24 and Comparative Examples B1 to B3 was subjected to the relevant performance test in Table 2 below in the following methods, and the test results were shown in Table 2.

Positive electrode slurry gelation test method: After the positive electrode slurry used for preparing the positive electrode plate included in the sodium-ion battery cell of each example was stored at room temperature for 12 hours, the gelation of the positive electrode slurry was observed with the naked eye.

CW test method: The electrode plate was punched into a 1540.25 mm$^2$ electrode plate through a punching machine; then the electrode plate was weighed to subtract the weight of the aluminum foil so as to obtain the weight of the pure active material layer, recorded as the weight of the active material layer/1540.25mm$^2$.

Positive electrode plate compacted density test method: The positive electrode plate compacted density could be tested with specific reference to a test method for a first-cycle discharge gram capacity and first-cycle charge-discharge efficiency of a positive electrode material lithium manganate for lithium-ion batteries. Details referred to the standard GB/T 39864-2021 or GB/T 42161-2022. Test could specifically refer to the test steps of the following parameters.

A battery electrode plate that met the processing requirements was obtained. A positive electrode plate with a diameter of 14 mm was punched out using a punching machine. An electronic balance and a desktop digital thickness gauge were used to measure a mass $m_c$ and a thickness $d_c$ of the positive electrode plate respectively. A sufficient number of aluminum foil base sheets with a diameter of 14 mm were punched out using the punching machine. The electronic balance and the desktop digital thickness gauge were used to measure a mass $m_{Al}$ and a thickness $d_{Al}$ of the aluminum foil base sheet respectively. The positive electrode plate compacted density was calculated according to the following formula:

$$\text{positive electrode plate compacted density } \rho_c = (m_c - m_{Al}) \times 10^6 \div [\pi(\varphi/2) \times (d_c - d_{Al})];$$

;

where $\rho_c$ was the positive electrode plate compacted density, in grams per cubic centimeter (g/cm$^3$);
$m_c$ was the positive electrode plate mass, in grams (g);

$m_{Al}$ was the aluminum foil base sheet mass, in grams (g);

$\varphi$ was the positive electrode plate diameter, in millimeters (mm);

$d_c$ was the positive electrode plate thickness, in microns ($\mu$m); and

$d_{Al}$ was the aluminum foil base sheet thickness, in microns ($\mu$m).

The test of the charge gram capacity, discharge gram capacity, and initial efficiency of the layered oxide referred to the aforementioned national standards: the standard GB/T 39864-2021 or GB/T 42161-2022.

The above assembled sodium-ion button battery was placed into a thermostat according to the battery processing method in the section 7.4 of the standard GB/T 39864-2021 or GB/T 42161-2022. The temperature was controlled at 23°C±2°C. The sodium-ion button battery was left standing for 2 h to 12 h, and then charged and discharged under the following conditions.

Charging: The sodium-ion button battery was charged to 3.75 V at a constant current of 0.1C and then charged to a cutoff current of 0.05C at a constant voltage. Discharging: The sodium-ion button battery was discharged to 2.0 V at a constant current of 0.1C.

After one charge-discharge cycle of the above assembled sodium-ion button battery in the section 7.4 was performed according to the section 7.5 of the standard GB/T 39864-2021 or GB/T 42161-2022, a charge-discharge capacity of the sodium-ion button battery and a mass of the layered oxide in the corresponding sodium-ion button battery were recorded. Then, the first-cycle discharge gram capacity and first-cycle charge-discharge efficiency of the layered oxide were calculated.

The first-cycle discharge gram capacity was calculated according to formula (4) in the section 8.1 of the standard GB/T 39864-2021 or GB/T 42161-2022, and the first-cycle charge-discharge efficiency was calculated according to formula (5) in the section 8.2 of the standard GB/T 39864-2021 or GB/T 42161-2022.

$$C = Q_{ID}/m \qquad\qquad (4)$$

$$\eta = Q_{ID}/Q_{IC} \times 100\% \qquad\qquad (5)$$

In the formula 4:

C was the first-cycle discharge gram capacity, in milliampere-hours per gram (mA.h/g);

$Q_{ID}$ was the first-cycle discharge gram capacity, in milliampere-hours per gram (mA.h/g); and

m was the mass of the layered oxide in the tested sodium-ion button battery, in grams (g).

In the formula 5:

$\eta$ was the first-cycle charge-discharge efficiency;

$Q_{ID}$ was the first-cycle discharge capacity, in milliampere-hours (mA.h); and

$Q_{IC}$ was the first-cycle charge capacity, in milliampere-hours (mA.h).

Electrode plate porosity test method: Test was performed using a gas displacement method, with specific reference to GB/T24586-2009. The electrode plate porosity test method included the following specific steps: The electrode plate was immersed in methyl ethyl carbonate (EMC) for cleaning and then tested according to the method specified in GB/T24586-2009. The gas displacement method, combined with Archimedes' principle and Boyle's law, was used to accurately measure a true volume of the measured material, that was a true volume of a sample, to obtain the porosity of the sample under test. A percentage of a pore volume in the electrode plate to a total volume of the electrode plate was the electrode plate porosity. A calculation formula was as follows: Porosity=(V-V0)/V×100%, where V0 was the true volume, and V was the apparent volume.

Sheet resistance test method: Test was performed with reference to the method in GB/T 30835-2014 or T/CASAS 019-2021; and tester calibration specification referred to the method in JJG 508-2004 for testing. Specifically, a four-probe method was used for testing. The electrode plate was immersed in methyl ethyl carbonate (EMC) for cleaning. Test was performed according to the method specified in GB/T 30835-2014 or T/CASAS 019-2021. Four copper plates with a length of 1.5 cm, a width of 1 cm, and a thickness of 2 mm were fixed equidistantly in a line. A distance between two copper plates in the middle was L (1 cm to 2 cm). A substrate for fixing the copper plates was an insulating material. During testing, lower end faces of the four copper plates were pressed on the tested electrode plate. Copper plates at two ends were connected to a direct current I. A voltage V was tested on the two copper plates in the middle. Three I and V values were read. An average of I and V was taken. A ratio V/I was the sheet resistance at the test site.

**Table 2**

| Example | CW (mg/1540.25mm$^2$) | Compacted density (g/cm$^3$) | Type and percentage of conductive agent | Positive electrode slurry gelation for 12 h |
|---|---|---|---|---|
| Example B1 | 310 | 3.2 | Carbon nanotubes, percentage: 0.5% | Slight gelation |
| Example B2 | 310 | 3.2 | Carbon nanotubes, percentage: 0.5% | Slight gelation |
| Example B3 | 310 | 3.2 | Carbon nanotubes, percentage: 0.5% | No gelation |
| Example B4 | 310 | 3.2 | Carbon nanotubes, percentage: 0.5% | No gelation |
| Example B5 | 310 | 3.2 | Carbon nanotubes, percentage: 0.5% | No gelation |
| Example B6 | 310 | 3.2 | Carbon nanotubes, percentage: 0.5% | No gelation |
| Example B7 | 310 | 3.2 | Carbon nanotubes, percentage: 0.5% | No gelation |
| Example B8 | 310 | 3.2 | Carbon nanotubes, percentage: 0.5% | No gelation |
| Example B9 | 310 | 3.2 | Carbon nanotubes, percentage: 0.5% | No gelation |
| Example B10 | 310 | 3.2 | Carbon nanotubes, percentage: 0.5% | No gelation |
| Example B11 | 310 | 3.2 | Carbon nanotubes, percentage: 0.5% | No gelation |
| Example B12 | 310 | 3.2 | Carbon nanotubes, percentage: 0.5% | No gelation |
| Example B13 | 310 | 3.2 | Carbon nanotubes, percentage: 0.5% | No gelation |
| Example B14 | 310 | 3.2 | Carbon nanotubes, percentage: 0.5% | No gelation |
| Example B15 | 310 | 3.2 | No carbon nanotubes, all being carbon black | No gelation |
| Example B16 | 260 | 3.2 | Carbon nanotubes, percentage: 0.5% | No gelation |
| Example B17 | 300 | 3.2 | Carbon nanotubes, percentage: 0.5% | No gelation |
| Example B18 | 350 | 3.2 | Carbon nanotubes, percentage: 0.5% | No gelation |
| Example B19 | 310 | 2.8 | Carbon nanotubes, percentage: 0.5% | No gelation |
| Example B20 | 310 | 3.1 | Carbon nanotubes, percentage: 0.5% | No gelation |
| Example B21 | 310 | 3.4 | Carbon nanotubes, percentage: 0.5% | No gelation |
| Example B22 | 310 | 3.2 | Carbon nanotubes, percentage: 0.1% | No gelation |

(continued)

| Example | CW (mg/1540.25mm$^2$) | Compacted density (g/cm$^3$) | Type and percentage of conductive agent | Positive electrode slurry gelation for 12 h |
|---|---|---|---|---|
| Example B23 | 310 | 3.2 | Carbon nanotubes, percentage: 2.5% | No gelation |
| Example B24 | 310 | 3.2 | Carbon fiber, percentage: 1% | No gelation |
| Comparative Example B1 | 310 | 3.2 | Carbon nanotubes, percentage: 0.5% | Moderate gelation |
| Comparative Example B2 | 310 | 3.2 | Carbon nanotubes, percentage: 0.5% | No gelation |
| Comparative Example B3 | 310 | 3.2 | Carbon nanotubes, percentage: 0.5% | Moderate gelation |

Electrochemical performance test of sodium-ion battery cell in each example:

The sodium-ion battery cell provided in each of the above Examples B1 to B24 and Comparative Examples B1 to B3 was subjected to the relevant electrochemical performance test in Table 3 below according to the following methods, and the test results were shown in Table 3.

Sodium-ion battery cell relevant performance test method:

Cycling DCR test: DCR was tested according to the normal temperature test method in "Performance Test Specification for High-Power Lithium-Ion Power Batteries for HEV":

The battery cell (cell) under test was discharged to a cutoff voltage (3.0 V) at a constant current of 1C, left standing at $20\pm2°C$ for 1 h, and then charged for 18 min at a current of 1C. SOC was adjusted to 30%. Then, the battery cell was left standing for 1 h, then charged for 1.5 min at 3C, left standing for 1 h, then discharged for 0.5 min at 9C, left standing for 1 h, and then charged for 6 min at 1C. Then, SOC was adjusted to 40%. Then, the battery cell was left standing for 1 h. The above process was cycled in this way until the tested SOC was 70%. A DCR value was obtained through a calculation formula.

Energy density: Each single cell under test was charged at the room temperature to a voltage of 4.2 V at a rate of 0.33C, and then discharged to a voltage of 2.0 V at a rate of 0.33C. Discharge energy S0 was tested. Then, a mass M of the battery cell corresponding to S0 was tested. A mass energy density of the battery cell was calculated according to a formula S0/M.

Cycling retention rate (%): At 25°C, a secondary battery was charged to 3.85 V at a constant current of 0.33C, then charged to a current of 0.05C at a constant voltage of 3.85 V, and then discharged to 1.5 V at a constant current of 1C. This process was used as one charge-discharge cycle. With the first-cycle discharge capacity as 100%, a capacity retention rate after 1000 cycles of the battery was calculated. Capacity retention rate after 1000 cycles of the battery (%) =discharge capacity of the 1000th cycle/first-cycle discharge capacity$\times$100%.

Table 3

| Example | Cycling DCR of battery cell (mΩ) | Energy density of battery cell (Wh/Kg) | Cycling retention rate (%) |
|---|---|---|---|
| Example B1 | 1.0 | 136 | 85 |
| Example B2 | 1.2 | 139 | 83 |
| Example B3 | 1.3 | 141 | 84 |
| Example B4 | 1.4 | 143 | 82 |
| Example B5 | 1.2 | 144 | 82 |
| Example B6 | 1.3 | 145 | 81 |
| Example B7 | 1.5 | 146 | 81 |
| Example B8 | 1.7 | 147 | 80 |
| Example B9 | 1.8 | 147 | 78 |
| Example B10 | 1.5 | 135 | 83 |

(continued)

| Example | Cycling DCR of battery cell (mΩ) | Energy density of battery cell (Wh/Kg) | Cycling retention rate (%) |
|---|---|---|---|
| Example B11 | 1.6 | 139 | 80 |
| Example B12 | 1.6 | 135 | 82 |
| Example B13 | 1.4 | 136 | 83 |
| Example B14 | 1.6 | 135 | 81 |
| Example B15 | 1.5 | 125 | 81 |
| Example B16 | 1.5 | 130 | 85 |
| Example B17 | 1.7 | 139 | 84 |
| Example B18 | 1.4 | 146 | 82 |
| Example B19 | 1.6 | 125 | 87 |
| Example B20 | 1.4 | 132 | 85 |
| Example B21 | 1.7 | 145 | 80 |
| Example B22 | 1.6 | 145 | 73 |
| Example B23 | 1.4 | 130 | 87 |
| Example B24 | 1.8 | 134 | 82 |
| Comparative Example B1 | 2.1 | 123 | 64 |
| Comparative Example B2 | 2.3 | 140 | 70 |
| Comparative Example B3 | 2.2 | 122 | 63 |

From the data in Tables 2 and 3, it can be seen that in the sodium-ion battery of this application, the compacted density of the positive electrode active material layer contained in the positive electrode plate of the sodium-ion battery cell provided in each of Examples B1 to B24 can reach up to 2.8 g/cm$^3$ to 3.4 g/cm$^3$, and the CW of the positive electrode active material layer can reach up to 260 mg/1540.25 mm$^2$ to 350 mg/1540.25 mm$^2$. Further, when the CW and compacted density of the positive electrode active material layer are controlled, the porosity of the positive electrode active material layer is 40% to 65%, and the sheet resistance is 0.5 mΩ to 5 mΩ. Specifically, the porosity and sheet resistance of the positive electrode active material layer can be adjusted according to the CW, compacted density, and conductive agent contained of the positive electrode active material layer.

From comparison of Examples B1 to B8 in the table, it can be seen that as the content of the zinc element in the layered oxide represented by the chemical formula (I) is gradually increased, the cell energy density of the sodium-ion battery cell is gradually increased, and certainly, the overall trend of the cycling performance of the corresponding sodium-ion battery cell shows a decrease. In the layered oxide represented by the chemical formula (I), as the content of the zinc element is increased, the gram capacity of the layered oxide can be increased, but the structural stability of the layered oxide is not facilitated, resulting in a decrease in the cycling performance of its reversible capacity. However, from comparison of Comparative Example 1 and Comparative Example 2, it can be seen that when the zinc element is controlled in an appropriate range, and the stoichiometric ratio of Zn to Ni, and Mn is controlled in an appropriate stoichiometric ratio range, the layered oxide represented by the chemical formula (I) can effectively balance high gram capacity and good cycling stability of the reversible capacity.

From comparison of Example B3 and Examples B10 to B14 in the table, it can be seen that the type of the doping metal element contained in the layered oxide represented by the chemical formula (I) also has certain influence on the gram capacity and structural stability of the layered oxide, therefore, the doping metal element represented by M participates in the disordered arrangement of the metal elements in the transition metal layer contained in the layered oxide, which can contribute to the gram capacity performance and/or structural stability of the layered oxide.

From comparison of Examples B14 and B15, the type of the conductive agent contained in the positive electrode active material layer of the positive electrode plate has certain influence on the capacity performance of the positive electrode plate. When the conductive agent contains linear carbon nanotubes, the cell energy density of the corresponding sodium-ion battery cell is higher than that of Example B15.

From comparison of Examples B1 to B15 and Comparative Examples B1 to B3, it can be seen that when the zinc content of the layered oxide is too low, such as in Comparative Example B1 and Comparative Example B3, the energy density of the sodium-ion battery cell is significantly decreased, and the cycling retention rate of the sodium-ion battery cell is also significantly reduced. When the zinc content of the layered oxide is too high, such as in Comparative Example B2, although the energy density of the sodium-ion battery cell can be maintained without significant decrease, the cycling retention rate of the sodium-ion battery cell is significantly decreased. It can be seen that the zinc element, other metal element types, contents of the metal elements in the layered oxide represented by the chemical formula (I) can significantly affect the disordered arrangement of the metal elements in the transition metal layer contained in the layered oxide, thereby significantly affecting the comprehensive performance of the gram capacity and cycling stability of the layered oxide.

It can be seen that in the layered oxide according to the embodiments of this application, the zinc element is controlled in an appropriately low content range, and the contents of the zinc element and other metal elements such as Ni, Fe, and Mn are controlled, allowing the transition metal layer contained in the layered oxide according to the embodiments of this application to have a specific arrangement, and balancing the structural stability of the layered oxide while effectively increasing the gram capacity of the layered oxide, thereby improving the cycling performance of the layered oxide and the sodium-ion battery. In addition, this also indicates that in the layered oxide according to the embodiments of this application, a higher content of the zinc element does not lead to a higher gram capacity of the layered oxide and better cycling performance, but when the content of the zinc element exceeds a certain content, its gram capacity does not continue to increase, and this is disadvantageous to the structural stability of the layered oxide, resulting in the degraded cycling performance of the layered oxide.

In addition, from the data in Table 3, it can be seen that the cell DCR variation range of the sodium-ion battery cell in each of Examples B1 to B24 is not large, the difference in the cell DCR of the sodium-ion battery cells in Examples B1 to B24 is in a range of 0 m$\Omega$ to 0.8 m$\Omega$. Moreover, the cell DCR of the sodium-ion battery cell in each of Examples B1 to B24 is significantly lower than the cell DCR value of the sodium-ion battery cell in each of Comparative Examples B1 to B3. Therefore, the zinc contained in the layered oxide represented by the chemical formula (I) is controlled in the content range of the chemical formula (I). The low content of zinc and other metal elements are controlled to adjust the arrangement in the transition metal layer. This can stabilize channels in the transition metal layer while improving the structural stability of the layered oxide, thereby improving the sodium ion transmission rate, and improving the DCR growth of the battery cell.

From further comparison of the positive electrode slurries in Examples B1 to B24 and positive electrode slurries in Comparative Examples B1 and B3, it can be seen that the gelation of the positive electrode slurries in Examples B1 to B24 is significantly lower than that of the positive electrode slurries in Comparative Examples B1 and B3. Therefore, in the layered oxide according to the embodiments of this application, the zinc element is controlled in an appropriately low content range, improving the processing performance of the layered oxide while effectively improving the gram capacity and cycling performance of the layered oxide.

In conclusion, it should be noted that the above embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the technical features mentioned in the embodiments can be combined in any way. This application is not limited to the specific embodiments disclosed herein, but includes all technical solutions falling within the scope of the claims.

**Claims**

1. A positive electrode material, **characterized by** comprising a layered oxide represented by the following chemical formula:

$$Na_qNi_xMn_yFe_zZn_pM_iO_j;$$

wherein $0.8{\leq}q{\leq}1$, $0.1{\leq}x{\leq}0.3$, $0.2{\leq}y{\leq}0.5$, $0.2{\leq}z{\leq}0.35$, $0.02{\leq}p{\leq}0.075$, $0{\leq}i{\leq}0.1$, $1.8{\leq}j{\leq}2$, and $x+y+z+p+i{\leq}1$; and M is an active and/or inert doping metal element.

2. The positive electrode material according to claim 1, **characterized in that** at least one of q, x, y, z, p, and i is in the following value ranges:
$0.15{\leq}x{\leq}0.25$, $0.25{\leq}y{\leq}0.45$, $0.25{\leq}z{\leq}0.32$, $0.04{\leq}p{\leq}0.07$, and $0{\leq}i{\leq}0.05$.

3. The positive electrode material according to claim 1 or 2, **characterized in that** a ratio of a total stoichiometric content of the Ni element, the Mn element, the Fe element, the Zn element, and the doping metal element to a stoichiometric content of the Na element is 1:(0.8 to 1), optionally 1:(0.83 to 0.95).

4. The positive electrode material according to any one of claims 1 to 3, **characterized in that** a stoichiometric ratio of the Zn element to the Ni element is 1:(3 to 15), optionally 1:(3.1 to 11);
and/or
a stoichiometric ratio of the Zn element to the Mn element is 1:(4 to 25), optionally 1:(5 to 15).

5. The positive electrode material according to any one of claims 1 to 4, **characterized in that** the doping metal element comprises at least one of V, Ca, Cr, Al, Sc, Sn, Sb, Zr, Nb, Ti, Mg, Cu, Ru, and Ir.

6. The positive electrode material according to any one of claims 1 to 5, **characterized in that** the layered oxide comprises at least one of $Na_{0.89}Ni_{0.23}Mn_{0.45}Fe_{0.3}Zn_{0.02}O_2$, $Na_{0.89}Ni_{0.23}Mn_{0.44}Fe_{0.3}Zn_{0.03}O_2$, $Na_{0.85}Ni_{0.23}Mn_{0.42}Fe_{0.28}Zn_{0.04}Cu_{0.02}O_2$, $Na_{0.89}Ni_{0.23}Mn_{0.42}Fe_{0.3}Zn_{0.05}O_2$, $Na_{0.89}Ni_{0.23}Mn_{0.41}Fe_{0.3}Zn_{0.06}O_2$, $Na_{0.89}Ni_{0.23}Mn_{0.42}Fe_{0.285}Zn_{0.065}O_2$, $Na_{0.89}Ni_{0.23}Mn_{0.42}Fe_{0.28}Zn_{0.07}O_2$, $Na_{0.9}Ni_{0.23}Mn_{0.4}Fe_{0.3}Zn_{0.075}O_2$, $Na_{0.85}Ni_{0.23}Mn_{0.42}Fe_{0.28}Zn_{0.04}V_{0.02}O_2$, $Na_{0.85}Ni_{0.23}Mn_{0.42}Fe_{0.28}Zn_{0.04}Cr_{0.02}O_2$, $Na_{0.85}Ni_{0.23}Mn_{0.42}Fe_{0.28}Zn_{0.04}Al_{0.02}O_2$, $Na_{0.85}Ni_{0.23}Mn_{0.42}Fe_{0.28}Zn_{0.04}Sc_{0.02}O_2$, $Na_{0.85}Ni_{0.23}Mn_{0.42}Fe_{0.28}Zn_{0.04}Sn_{0.02}O_2$, $Na_{0.85}Ni_{0.23}Mn_{0.42}Fe_{0.28}Zn_{0.04}Sb_{0.02}O_2$, $Na_{0.85}Ni_{0.23}Mn_{0.42}Fe_{0.28}Zn_{0.04}Zr_{0.02}O_2$, $Na_{0.85}Ni_{0.23}Mn_{0.42}Fe_{0.28}Zn_{0.04}Nb_{0.02}O_2$, $Na_{0.85}Ni_{0.23}Mn_{0.42}Fe_{0.28}Zn_{0.04}Ti_{0.02}O_2$, $Na_{0.85}Ni_{0.23}Mn_{0.42}Fe_{0.28}Zn_{0.04}Mg_{0.02}O_2$, $Na_{0.85}Ni_{0.23}Mn_{0.42}Fe_{0.28}Zn_{0.04}Ru_{0.02}O_2$, $Na_{0.85}Ni_{0.23}Mn_{0.42}Fe_{0.28}Zn_{0.04}Ir_{0.02}O_2$, and $Na_{0.85}Ni_{0.23}Mn_{0.42}Fe_{0.28}Zn_{0.04}Ir_{0.02}O_{1.8}$.

7. The positive electrode material according to any one of claims 1 to 6, **characterized in that** the layered oxide comprises at least one of the following characteristics (1) to (3):

(1) a crystal structure comprises an O3-phase layered metal oxide, and the O3-phase layered metal oxide accounts for 95% or more of a total weight of the layered oxide;
(2) a particle size $D_v50$ is 3 $\mu$m to 11 $\mu$m, optionally 4 $\mu$m to 8 $\mu$m; and
(3) a single crystal is comprised, wherein the single crystal is flat in morphology.

8. The positive electrode material according to claim 7, **characterized in that** the single crystal comprises at least one of the following characteristics (1) to (4):

(1) a ratio of a length, a width, and a thickness is (1 to 8):(1 to 5):(0.5 to 2.5), optionally (2 to 6):(2 to 4):(1 to 2);
(2) the length is 1 $\mu$m to 8 $\mu$m, optionally 2 $\mu$m to 6 $\mu$m;
(3) the width is 1 $\mu$m to 5 $\mu$m, optionally 2 $\mu$m to 4 $\mu$m; and
(4) the thickness is 0.5 $\mu$m to 2.5 $\mu$m, optionally 1 $\mu$m to 2 $\mu$m.

9. The positive electrode material according to any one of claims 1 to 7, **characterized in that** the layered oxide comprises at least one of the following characteristics (1) to (3):

(1) a compacted density under a pressure of 2 tons is 2.8 $g/cm^3$ to 3.1 $g/cm^3$, optionally 2.9 $g/cm^3$ to 3.09 $g/cm^3$;
(2) a compacted density under a pressure of 3 tons is 3.1 $g/cm^3$ to 3.3 $g/cm^3$, optionally 3.15 $g/cm^3$ to 3.28 $g/cm^3$; and
(3) a specific surface area is 0.5 $m^2/g$ to 1.3 $m^2/g$, optionally 0.6 $m^2/g$ to 0.9 $m^2/g$.

10. The positive electrode material according to any one of claims 1 to 9, **characterized in that** the layered oxide at 1.5 V to 4.2 V and 0.1C comprises at least one of the following characteristics (1) to (3):

(1) a charge gram capacity is 164 mAh/g to 174 mAh/g, optionally 165 mAh/g to 172 mAh/g;
(2) a discharge gram capacity is 158 mAh/g to 165 mAh/g, optionally 160 mAh/g to 163 mAh/g; and
(3) initial efficiency is 92% to 98%, optionally 92% to 95%.

11. A preparation method of a positive electrode material, **characterized by** comprising the following steps:

providing a precursor of $Na_qNi_xMn_yFe_zZn_pM_iO_j$; and
performing sintering treatment on the precursor to obtain a layered oxide represented by a chemical formula $Na_qNi_xMn_yFe_zZn_pM_iO_j$;

wherein $0.8 \leq q \leq 1$, $0.1 \leq x \leq 0.3$, $0.2 \leq y \leq 0.5$, $0.2 \leq z \leq 0.35$, $0.02 \leq p \leq 0.07$, $0 \leq i \leq 0.1$, $1.8 \leq j \leq 2$, and $x+y+z+p+i \leq 1$; and M is an active and/or inert doping metal element.

12. The preparation method according to claim 11, **characterized in that** the doping metal element comprises at least one of V, Ca, Cr, Al, Sc, Sn, Sb, Zr, Nb, Ti, Mg, Cu, Ru, and Ir; and/or
at least one of q, x, y, z, p, and i is in the following value ranges:
$0.15 \leq x \leq 0.25$, $0.25 \leq y \leq 0.45$, $0.25 \leq z \leq 0.32$, $0.04 \leq p \leq 0.07$, and $0 \leq i \leq 0.05$.

13. The preparation method according to claim 11 or 12, **characterized in that** the sintering treatment comprises at least one of the following conditions (1) to (4):

(1) a temperature is 700°C to 980°C, optionally 750°C to 950°C;
(2) a time is 4 h to 20 h, optionally 6 h to 12 h; and
(3) a temperature is increased to a sintering treatment temperature at a heating rate of 2°C/min to 15°C/min.

14. The preparation method according to claim 11 or 12, **characterized in that** the precursor of $Na_qNi_xMn_yFe_zZn_pM_iO_j$ is prepared in a method comprising the following step:

performing solid-phase mixing treatment on a sodium source, a nickel source, a manganese source, an iron source, a zinc source, and a doping metal element source represented by M according to an elemental stoichiometric ratio in $Na_qNi_xMn_yFe_zZn_pM_iO_j$, to obtain the precursor;
and/or
the precursor of $Na_qNi_xMn_yFe_zZn_pM_iO_j$ is prepared in a method comprising the following steps:

preparing a mixed solution from a soluble nickel source, a soluble manganese source, a soluble iron source, a soluble zinc source, and a soluble doping metal element source represented by M according to an elemental stoichiometric ratio in $Na_qNi_xMn_yFe_zZn_pM_iO_j$, and adding at least one of a precipitant and a complexing agent for co-precipitation treatment to obtain a precipitate mixture; and
mixing the precipitate mixture with a sodium source to obtain the precursor.

15. A positive electrode, comprising a current collector and a positive electrode active material layer provided on a surface of the current collector, **characterized in that** the positive electrode active material layer comprises the positive electrode material according to any one of claims 1 to 10 or a positive electrode material prepared in the preparation method according to any one of claims 11 to 14.

16. The positive electrode according to claim 15, **characterized in that** a content of the positive electrode active material layer on one surface of the current collector is 260 mg/1540.25mm$^2$ to 350 mg/1540.25mm$^2$, optionally 280 mg/1540.25mm$^2$ to 320 mg/1540.25mm$^2$; and/or
a compacted density of the positive electrode active material layer is 2.8 g/cm$^3$ to 3.4 g/cm$^3$, optionally 2.9 g/cm$^3$ to 3.2 g/cm$^3$.

17. The positive electrode according to claim 15 or 16, **characterized in that** a porosity of the positive electrode active material layer is 40% to 65%, optionally 45% to 60%; and/or
the positive electrode is an electrode plate, and a sheet resistance of the electrode plate is 0.5 mΩ to 5 mΩ, optionally 0.5 mΩ to 3 mΩ.

18. The positive electrode according to any one of claims 15 to 17, **characterized in that** the positive electrode is an electrode plate, and a ratio of a thickness from one surface to another opposite surface of the electrode plate to a thickness of the current collector is (6 to 15):1, optionally (8 to 14):1.

19. The positive electrode according to any one of claims 15 to 18, **characterized in that** a conductive agent contained in the positive electrode active material layer comprises a linear conductive agent.

20. The positive electrode according to claim 19, **characterized in that** a mass percentage of the linear conductive agent in the positive electrode active material layer is 0.1% to 2.5%, optionally 0.2% to 0.8%; and/or

an aspect ratio of the linear conductive agent is (40 to 3000):1, optionally (50 to 2500):1;
a length of the linear conductive agent is 0.5 μm to 5 μm, optionally 0.5 μm to 2 μm; and/or

a diameter of the linear conductive agent is 2 nm to 10 nm, optionally 3 nm to 7 nm; and/or
the linear conductive agent comprises at least one of carbon nanotubes, carbon fiber, and conductive oxide nanowires.

21. A sodium battery, **characterized by** comprising the positive electrode according to any one of claims 15 to 20.

22. An electric apparatus, **characterized by** comprising the sodium battery according to claim 21.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/CN2024/087808** |

| A. | CLASSIFICATION OF SUBJECT MATTER |
| --- | --- |

H01M4/36(2006.01)i; H01M4/525(2010.01)i; H01M4/505(2010.01)i; H01M4/485(2010.01)i; H01M10/054(2010.01)i; H01M4/131(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI: 正极, 阴极, 钠, 镍, 锰, 铁, 锌, 电池, cathode, positive, Na, sodium, Ni, nickel, Mn, manganese, Fe, iron, Zn, zinc, battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116425212 A (BEIHANG UNIVERSITY) 14 July 2023 (2023-07-14) description, paragraphs [0006]-[0107] | 1-22 |
| X | CN 116605918 A (BEIHANG UNIVERSITY) 18 August 2023 (2023-08-18) description, paragraphs [0005]-[0080] | 1-22 |
| X | CN 116544408 A (YOUYAN (GUANGDONG) INSTITUTE OF NEW MATERIALS TECHNOLOGY) 04 August 2023 (2023-08-04) description, paragraphs [0006]-[0090] | 1-22 |
| A | CN 112670497 A (CONTEMPORARY AMPEREX TECHNOLOGY CO., LTD.) 16 April 2021 (2021-04-16) entire document | 1-22 |
| A | CN 109585795 A (INSTITUTE OF PHYSICS, CHINESE ACADEMY OF SCIENCES) 05 April 2019 (2019-04-05) entire document | 1-22 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **08 July 2024** | **14 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087808**

| Patent document cited in search report | | | Publication date (day/month/year) | Patent family member(s) | | | Publication date (day/month/year) |
|---|---|---|---|---|---|---|---|
| CN | 116425212 | A | 14 July 2023 | None | | | |
| CN | 116605918 | A | 18 August 2023 | None | | | |
| CN | 116544408 | A | 04 August 2023 | None | | | |
| CN | 112670497 | A | 16 April 2021 | WO | 2021057457 | A1 | 01 April 2021 |
| | | | | EP | 3972016 | A1 | 23 March 2022 |
| | | | | EP | 3972016 | A4 | 08 February 2023 |
| | | | | US | 2022123299 | A1 | 21 April 2022 |
| CN | 109585795 | A | 05 April 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311277081
- CN 202410222045

**Non-patent literature cited in the description**

- *GB/T16418*
- *GB/T19587-2017*
- *GB/T24533-2019*
- *GB/T 39864-2021*
- *GB/T 42161-2022*
- *GB/T24586-2009*
- *GB/T 30835-2014*